(19) **Europäisches Patentamt / European Patent Office / Office européen des brevets**

(11) **EP 4 668 664 A1**

(12) **EUROPEAN PATENT APPLICATION**
published in accordance with Art. 153(4) EPC

(43) Date of publication:
**24.12.2025 Bulletin 2025/52**

(21) Application number: **24757106.0**

(22) Date of filing: **06.02.2024**

(51) International Patent Classification (IPC):
*H04L 5/14* (2006.01)    *H04W 72/04* (2023.01)
*H04W 72/231* (2023.01)    *H04L 5/00* (2006.01)

(52) Cooperative Patent Classification (CPC):
**H04L 5/00; H04L 5/14; H04W 72/04; H04W 72/231**

(86) International application number:
**PCT/KR2024/001737**

(87) International publication number:
**WO 2024/172377 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:    **15.02.2023   KR 20230019915
29.12.2023   KR 20230197504**

(71) Applicant: **LG Electronics Inc.
Yeongdeungpo-gu
Seoul 07336 (KR)**

(72) Inventors:
• **YOU, Hyangsun**
**Seoul 06772 (KR)**
• **KO, Hyunsoo**
**Seoul 06772 (KR)**
• **KIM, Seonwook**
**Seoul 06772 (KR)**

(74) Representative: **Plasseraud IP
104 Rue de Richelieu
CS92104
75080 Paris Cedex 02 (FR)**

(54) **OPERATION METHOD OF DEVICE IN WIRELESS COMMUNICATION SYSTEM AND DEVICE USING SAME**

(57)    Provided are an operation method of a device in a wireless communication system and a device. The device receives frequency resource information from a base station and performs communication with the base station in a specific frequency bandwidth part (BWP) on the basis of the frequency resource information. The frequency resource information shows first subband frequency resources for a first subcarrier spacing (SCS) and second subband frequency resources for a second SCS. The device uses the first subband frequency resources to communicate with the base station on the basis that an SCS of the specific BWP is the first SCS, and uses the second subband frequency resources to communicate with the base station on the basis that the SCS of the specific BWP is the second SCS.

FIG. 22

Receiving frequency resource information notifying first subband frequency resources for a first subcarrier spacing (SCS) and second subband frequency resources for a second SCS from the base station — S221

Performing communication with the base station based on the frequency resource information in a specific frequency bandwidth part (BWP), wherein based on the SCS of the specific BWP being the first SCS, the UE communicates with the base station using the first subband frequency resources, and based on the SCS of the specific BWP being the second SCS, the UE communicates with the base station using the second subband frequency resources — S222

## Description

### TECHNICAL FIELD

This disclosure relates to a method of operating a device in a wireless communication system and a device using the method.

### BACKGROUND ART

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

In NR, full duplex (FD) operation can be performed. When performing FD operation, downlink reception and uplink transmission can occur simultaneously in a given time resource. Half duplex (HD) operation differs in that only one of downlink reception and uplink transmission can be performed in a given time resource. For FD operation, i) in the same time resource, some frequency resources may be allocated to downlink subbands and other frequency resources to uplink subbands, or ii) frequency resources may be allocated that can be used for both downlink reception and uplink transmission in the same time resource.

Meanwhile, when a cell performs FD operation, the user equipment (UE) can determine frequency resources constituting uplink subbands, downlink subbands, guard subbands, etc. within the cell. The UE can determine by receiving location information of each subband resource from the base station. In the prior art, the location of the sub-band resource is given relative to a specific reference subcarrier spacing (SCS).

However, the actual SCS of the frequency resources constituting the cell may not be the specific reference SCS, and in this case, the frequency resources may be configured differently. Then, the UE may not accurately reflect the edge and center locations of the frequency resources constituting the cell, and may not accurately determine the location of the subband.

### DISCLOSURE

### TECHNICAL PROBLEM

The technical problem that the present disclosure aims to solve is to provide a method of operating a device in a wireless communication system and a device that uses the method.

### TECHNICAL SOLUTION

A method of operating a device in a wireless communication system and a device using the method are provided. According to the method, a user equipment (UE) receives frequency resource information from a base station and performs a communication with the base station based on the frequency resource information in a specific bandwidth part (BWP). The frequency resource information informs of first subband frequency resources for a first subcarrier spacing (SCS) and second subband frequency resources for a second SCS. Based on an SCS of the specific BWP being the first SCS, the UE communicates with the base station using the first subband frequency resources, and based on an SCS of the specific BWP being the second SCS, the UE communicates with the base station using the second subband frequency resources.

In another aspect, a UE, apparatus, and computer-readable medium for executing the above method is provided.

In another aspect, a method of operating a base station and a base station using the method are provided. According to the operating method of the base station, the base station transmits frequency resource information to a user equipment (UE) and performs a communication with the UE based on the frequency resource information in a specific bandwidth part (BWP). The frequency resource information informs of first subband frequency resources for a first subcarrier spacing (SCS) and second subband frequency resources for a second SCS. Based on an SCS of the specific BWP being the first SCS, the base station communicates with the UE using the first subband frequency resources, and based on an SCS of the specific BWP being the second SCS, the base station communicates with the UE using the second subband frequency resources.

ADVANTAGEOUS EFFECTS

According to the method of the present disclosure, the UE can accurately determine the location of the subband by reflecting the edge and center locations of the actual frequency resources constituting the cell. Since the location of the frequency can be accurately determined even if the SCS is changed, not only the location of the subband but also, for example, the location of the frequency band to be measured can be accurately determined. Accordingly, the efficiency of communication can be increased and the throughput can also be increased.

**BRIEF DESCRIPTION OF THE DRAWINGS**

FIG. 1 illustrates a wireless communication system to which the present disclosure can be applied.

FIG. 2 is a block diagram showing the radio protocol architecture for the user plane.

FIG. 3 is a block diagram showing the radio protocol structure for the control plane.

FIG. 4 illustrates the system structure of a next-generation radio access network (NG-RAN) to which NR is applied.

FIG. 5 illustrates the functional division between NG-RAN and 5GC.

FIG. 6 illustrates a frame structure that can be applied in NR.

FIG. 7 illustrates the slot structure of an NR frame.

FIG. 8 illustrates the CORESET.

FIG. 9 shows an example of a frame structure for a new wireless access technology.

FIG. 10 illustrates the structure of a self-contained slot.

FIG. 11 illustrates physical channels and typical signal transmission.

FIG. 12 shows examples of how to apply full duplex within an intra-carrier.

FIG. 13 shows an example in which a time resource operating in half duplex (HD) and a time resource operating in full duplex (FD) such as SBFD or SSFD exist together.

FIG. 14 shows examples of a first time resource, a second time resource, a first frequency resource and a second frequency resource.

FIG. 15 shows another example of a first time resource, a second time resource, a first frequency resource, and a second frequency resource.

FIG. 16 shows examples of subband configurations.

FIG. 17 illustrates location candidates for an UL subband.

FIG. 18 shows candidate locations of an UL subband.

FIG. 19 shows candidate locations of a DL subband.

FIG. 20 illustrates candidate locations of a DL subband and an UL subband.

FIG. 21 shows an example where the resources constituting the UL subband are not aligned with the RBG grid.

FIG. 22 illustrates an operation method of a UE in a wireless communication system.

FIG. 23 illustrates a signaling and operation method between a base station and a UE in a wireless communication system.

FIG. 24 illustrates a wireless device that can be applied the present specification.

FIG. 25 shows an example of a signal processing module structure.

FIG. 26 shows another example of the structure of a signal processing module in a transmission device.

FIG. 27 shows an example of a wireless communication device according to an implementation example of the present disclosure.

FIG. 28 shows an example of the processor 2000.

FIG. 29 shows an example of the processor 3000.

FIG. 30 shows another example of a wireless device.

FIG. 31 shows another example of a wireless device applied to the present specification.

FIG. 32 illustrates a mobile device to which the present specification applies.

FIG. 33 illustrates the communication system 1 applied to this specification.

## MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

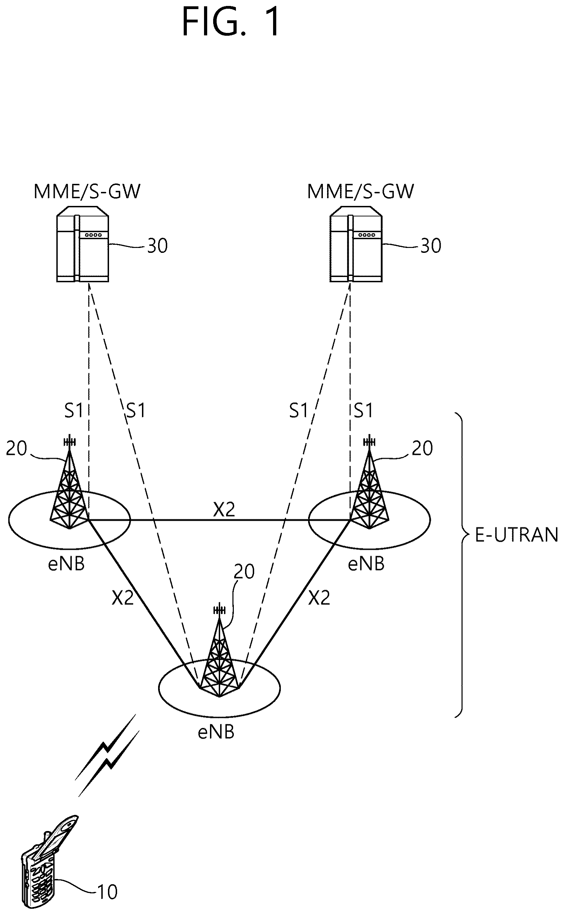

FIG. 1 illustrates a wireless communication system to which the present disclosure can be applied. This may also be called E-UTRAN (Evolved-UMTS Terrestrial Radio Access Network), or LTE (Long Term Evolution)/LTE-A system.

The E-UTRAN includes a base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, terminal etc. The BS 20 is generally a fixed station that communicates with the UE 10 and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

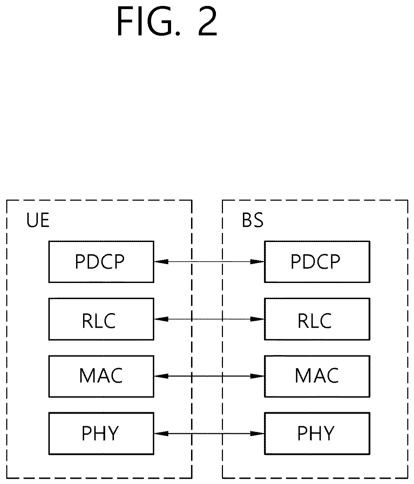

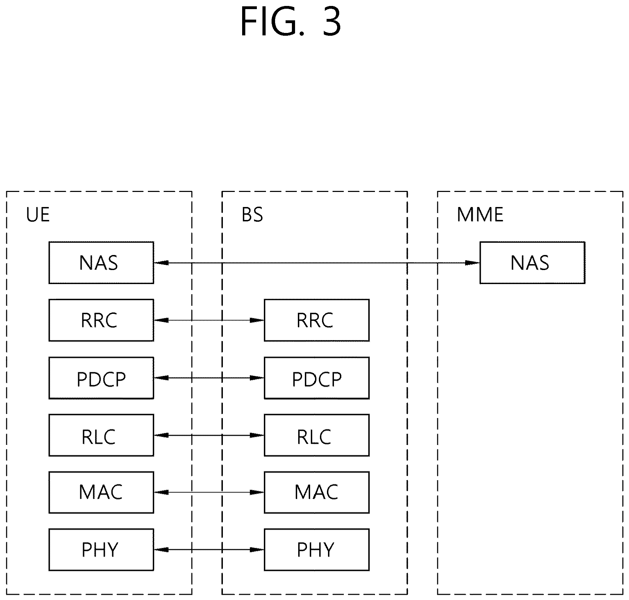

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is a higher layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new RAT or NR in the present disclosure for convenience.

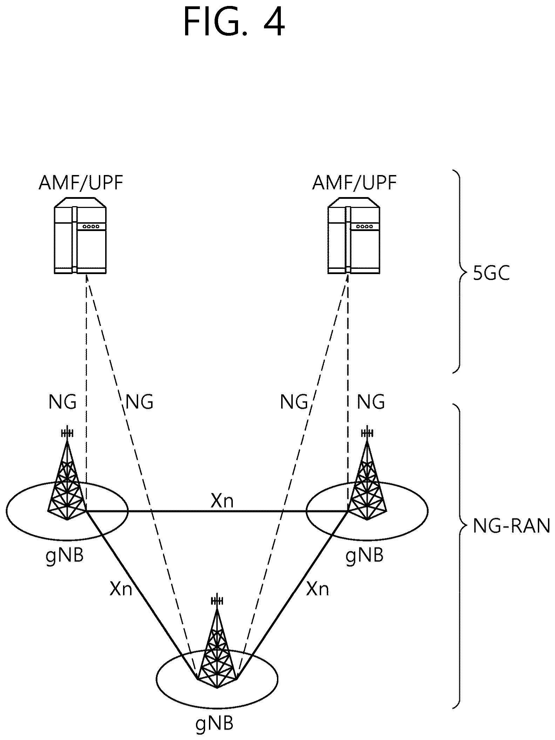

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a UE. FIG. 4 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

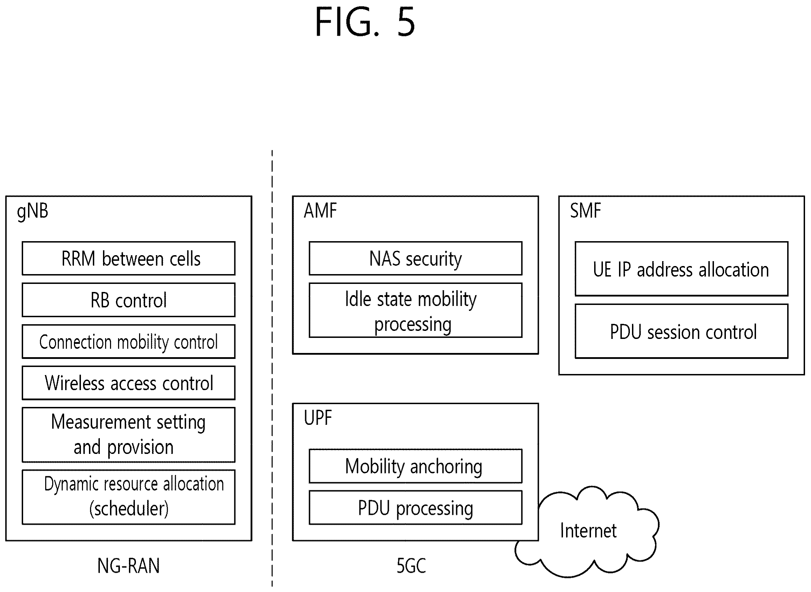

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

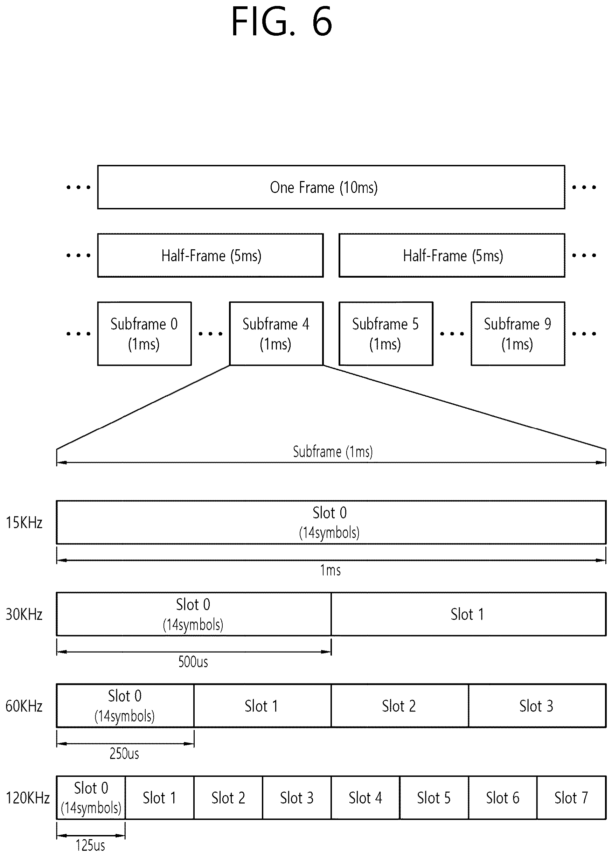

FIG. 6 illustrates an example of a frame structure that may be applied in NR.

Referring to FIG. 6, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration $\mu$.

[Table 1]

| $\mu$ | $\Delta f = 2^{\mu} \cdot 15$[kHz] | Cyclic prefix (CP) |
|---|---|---|
| 0 | 15 | Normal |
| 1 | 30 | Normal |
| 2 | 60 | Normal / Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations $\mu$.

[Table 2]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 6 illustrates a case of $\mu$=0, 1, 2, 3.

Table 2-1 below illustrates that the number of symbols per slot, the number of slots per frame, and the number of slots per subframe vary depending on the SCS, in case of using an extended CP.

[Table 2-1]

| SCS(15*2$^\mu$) | $N^{slot}_{symb}$ | $N^{frame, \mu}_{slot}$ | $N^{subframe, \mu}_{slot}$ |
|---|---|---|---|
| 60KHz ($\mu$=2) | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

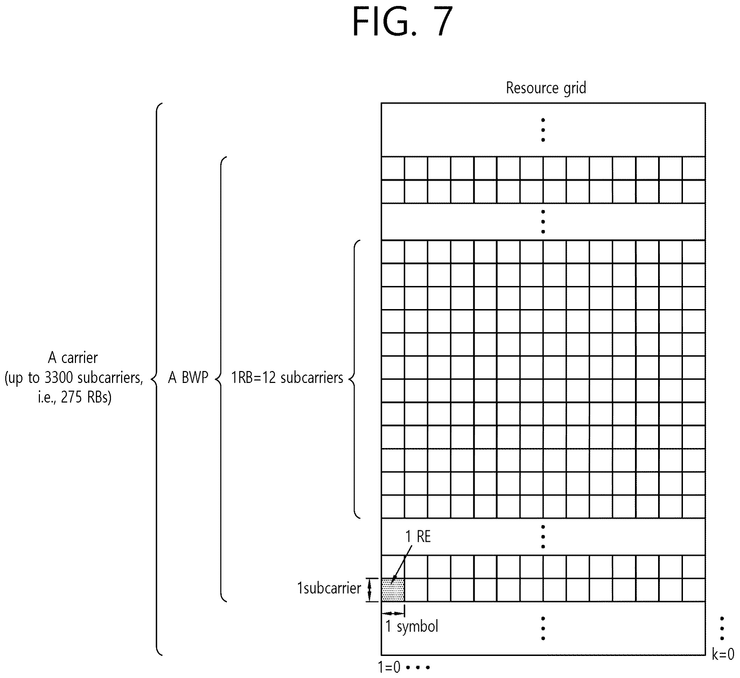

FIG. 7 illustrates a slot structure.

A slot may include a plurality of symbols in a time domain. For example, in case of a normal CP, one slot may include 14 symbols (or 7 symbols). However, in case of an extended CP, one slot may include 12 symbols (or 6 symbols). A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

[Table 3]

| Aggregation level | Number of CCEs |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

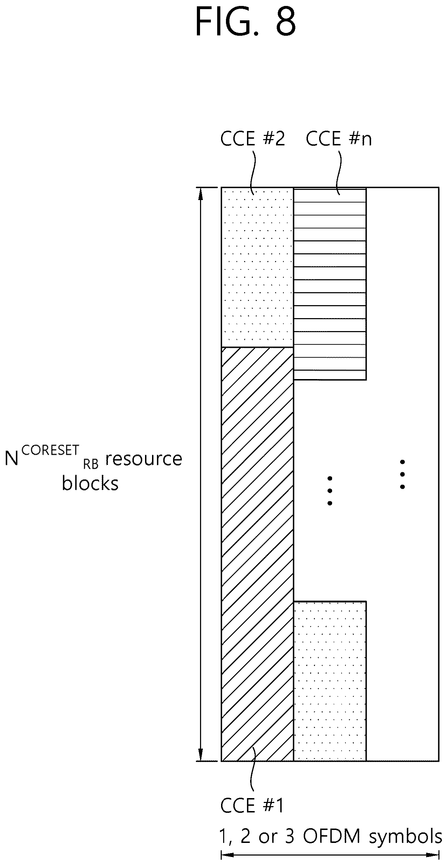

FIG. 8 illustrates CORESET.

Referring to FIG. 8, the CORESET includes $N^{CORESET}_{RB}$ number of resource blocks in the frequency domain, and $N^{CORESET}_{symb} \in \{1, 2, 3\}$ number of symbols in the time domain. $N^{CORESET}_{RB}$ and $N^{CORESET}_{symb}$ may be provided by a base station via higher layer signaling. As illustrated in FIG. 8, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system BW used by a base station (BS). All the UEs, excluding some (e.g., eMTC/NB-IoT UE) supporting only a narrow band, shall be able to receive wireless signals of the entire system BW of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system BW.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

<Self-contained subframe structure>

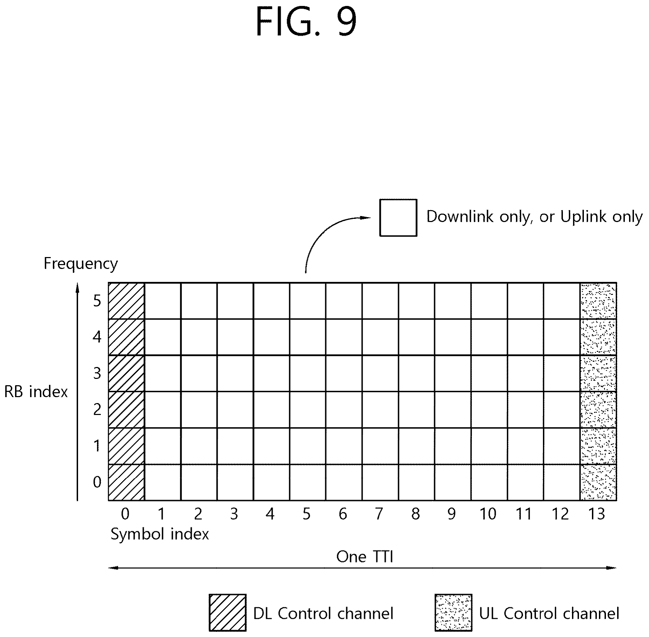

FIG. 9 shows an example of a frame structure for a new wireless access technology.

In NR, as shown in FIG. 9, a structure in which a control channel and a data channel are time-division-multiplexed within one TTI can be considered as a frame structure in order to minimize latency.

In FIG. 9, the hatched area represents the downlink control area, and the black portion represents the uplink control area. An unmarked area may be used for transmitting downlink data (DL data) or may be used for transmitting uplink data (UL data). The characteristic of this structure is that downlink (DL) transmission and uplink (UL) transmission proceed sequentially within one subframe, DL data can be transmitted within a subframe and UL ACK/NACK (Acknowledgement/Not-acknowledgement) can also be received. As a result, the time it takes to retransmit data when a data transmission error occurs is reduced, thereby minimizing the latency of final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

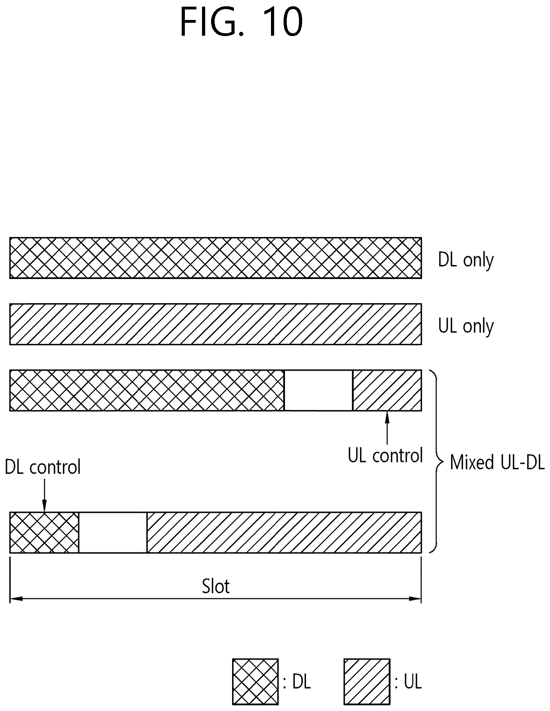

FIG. 10 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.

1. DL only configuration,
2. UL only configuration,
3. Mixed UL-DL configuration:

DL region + Guard period (GP) + UL control region,

DL control region + GP + UL region.

DL region: (i) DL data region, (ii) DL control region + DL data region.

UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

<Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of 5×5 cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

<Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH related with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks(SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process related with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.

1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),

4) Resource block set,

5) CCE-to-REG mapping parameter,

6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),

7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

[Table 4]

| QCL Type | Description |
| --- | --- |
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s ($0 \leq s < 40$), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

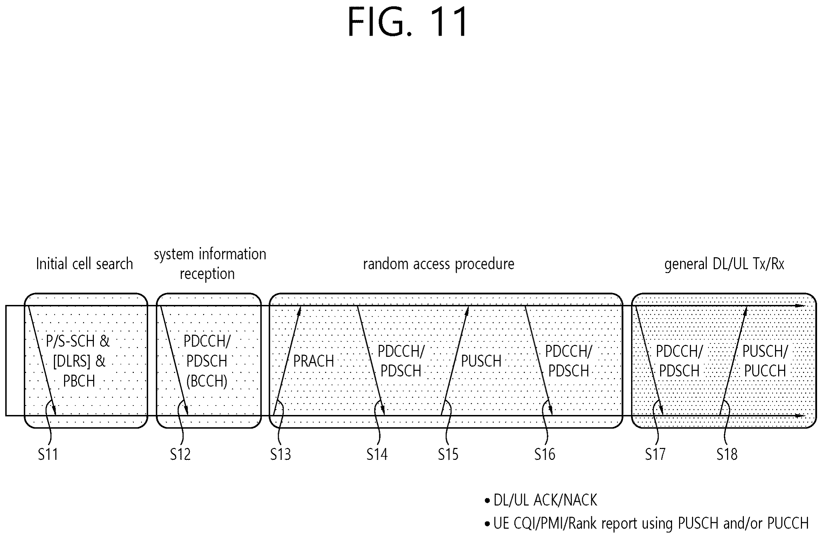

FIG. 11 illustrates physical channels and typical signal transmission.

Referring to FIG. 11, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/instruction of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.

- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

Technical features described individually in one drawing in this specification may be implemented individually or simultaneously.

The following drawings were prepared to explain a specific example of the present specification. Since the names of specific devices or specific signals/messages/fields described in the drawings are provided as examples, the technical features of this specification are not limited to the specific names used in the drawings below.

Now, full duplex operation will be described.

In 5G, new service types such as extended reality (XR), artificial intelligence-based service, and self-driving car are emerging. These services have characteristics that dynamically change traffic in both downlink (DL) and uplink (UL) directions, and require low latency for traffic (e.g., packets) to be transmitted. In 5G services, traffic will increase explosively to support these various new use cases.

Existing semi-static or dynamic TDD UL/DL configurations have limitations such as transmission time delay and interference between operators. The existing FDD method has limitations in terms of efficient frequency resource utilization in the DL/UL direction. Therefore, for low latency and efficient resource utilization in NR, the introduction of full duplex operation within a single carrier is being discussed.

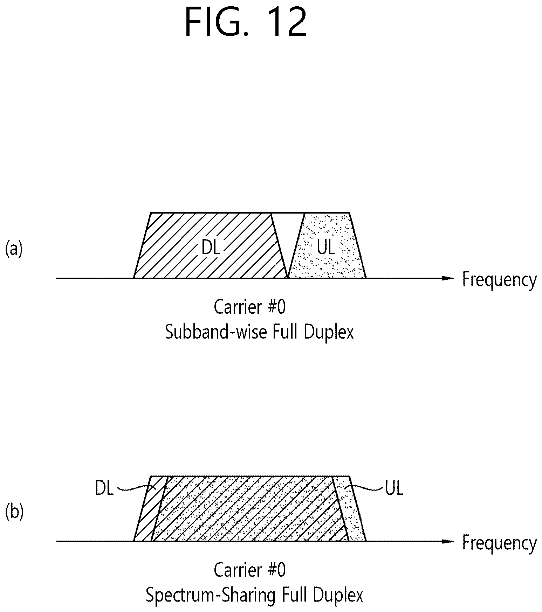

FIG. 12 shows examples of how to apply full duplex within an intra-carrier.

Referring to FIG. 12, the full duplex method includes subband-wise full duplex (hereinafter, it can be called subband full duplex or SBFD) as shown in (a) of FIG. 12 and spectrum sharing full duplex (hereinafter, it can be called SSFD) as shown in (b) of FIG. 12 may be considered.

In the case of SBFD, DL and UL are transmitted and received through different frequency resources within the same carrier (e.g., carrier #0). That is, different frequency resources are used in DL and UL for the same time resource.

In the case of SSFD, DL and UL are transmitted and received through the same or overlapped frequency resources within the same carrier (e.g., carrier #0). That is, the same or overlapping frequency resources can be used in DL and UL for the same time resource.

This full-duplex (FD) operation can also be used in combination with the existing half-duplex (HD) operation. For example, among time resources used for existing half-duplex-based TDD operation, some time resources may be used for full duplex operation. SBFD or SSFD operations can be performed on time resources that perform full duplex operations.

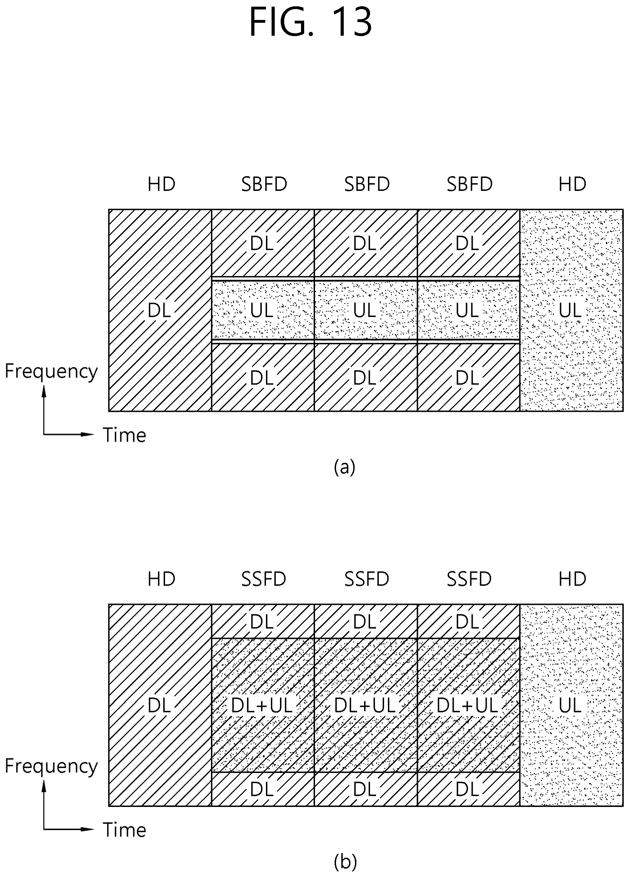

FIG. 13 shows an example in which a time resource operating in half duplex (HD) and a time resource operating in full duplex (FD) such as SBFD or SSFD exist together.

In (a) of FIG. 13, some time resources operating as SBFD are indicated as SBFD, and time resources operating as HD are indicated as HD. In (b) of FIG. 13, some time resources operating as SSFD are indicated as SSFD, and time resources operating as HD are indicated as HD. The unit of time resource may be, for example, a slot or symbol.

In time resources operating as SBFD, some frequency resources are used as DL resources, and other frequency resources are used as UL resources. Between the DL frequency resource and the UL frequency resource, there may be a guard subband that is unused and empty for both DL and UL. Guard subbands may also be referred to by other terms, such as guard frequency resources or guard subcarrier(s).

In time resources operating with SSFD, the entire frequency resource can be used for both DL and UL. Or, to reduce the impact of interference from other adjacent carriers (this may be referred to as ACI (adjacent carrier interference)), Some frequency resources at one or both ends of the carrier may not be used for DL and/or UL. That is, one or both ends of the carrier can be used as an unused guard band (guard subband) for both DL and UL. Alternatively, to reduce ACI on UL reception, one or both ends of the carrier may be used only for DL transmission.

In this disclosure, a slot resource that operate as HD is referred to as a HD slot, and a slot resource that operate as SBFD and a slot resource that operate as SSFD are referred to as a SBFD slot and a SSFD slot, respectively. The SBFD slot and the SSFD slot are also collectively referred to as FD slots.

In the present disclosure, in time resources operating as FD, among all frequency resources, frequency resources operating as DL may be referred to as a DL subband, and frequency resources operating as UL may be referred to as an UL subband, for convenience.

In the case of full duplex operation, both the base station and the UE can perform full duplex operation. That is, both the base station and the UE can simultaneously perform DL and UL transmission and reception using the same or different frequency resources in the same time resource.

Alternatively, only the base station can perform full duplex operation and the UE can perform half duplex operation. The base station can simultaneously perform transmission and reception of DL and UL using the same or different frequency resources in the same time resource, but the UE only performs DL reception or UL transmission in a specific time resource. In this case, the base station performs full duplex operation by performing DL transmission and UL reception with different UEs at the same time.

The content of the present disclosure is described assuming that the base station performs/supports a full duplex operation, but the UE performs/supports a half duplex operation. However, the content of the present disclosure can be applied even when both the base station and the UE perform/support full duplex operation.

Based on this discussion, the present disclosure proposes a method for determining frequency resource locations of DL subbands and/or UL subbands during intra-carrier full duplex operation.

In the following, the term network may be interpreted as gNB or CU/DU. Additionally, the term UE may be interpreted as MT (mobile terminal, mobile termination) of an IAB node or NCR-MT (MT of a network-controlled repeater).

A. Characteristics of DL/UL time/frequency resources for SBFD and SSFD operation

A cell (base station) can perform both DL transmission and UL reception in the same time resource in an FD scheme such as SBFD or SSFD. For example, the base station may perform HD operation in a first time resource and FD operation in a second time resource (which may be a time resource other than the first time resource).

The first time resource performing HD operation performs DL operation or UL operation across the frequency resources that comprise the entire system bandwidth. Within the first time resource performing the HD operation, the network performs the DL operation through the 1-1 time resource and the UL operation through the 1-2 time resource. At this time, the 1-1 time resource and the 1-2 time resource do not overlap with each other.

In the second time resource performing the FD operation, the network performs DL operations through all or part of the frequency resources (first frequency resources) among the frequency resources that constitute the system BW of the cell, and performs UL operations through all or part of the frequency resources (second frequency resources).

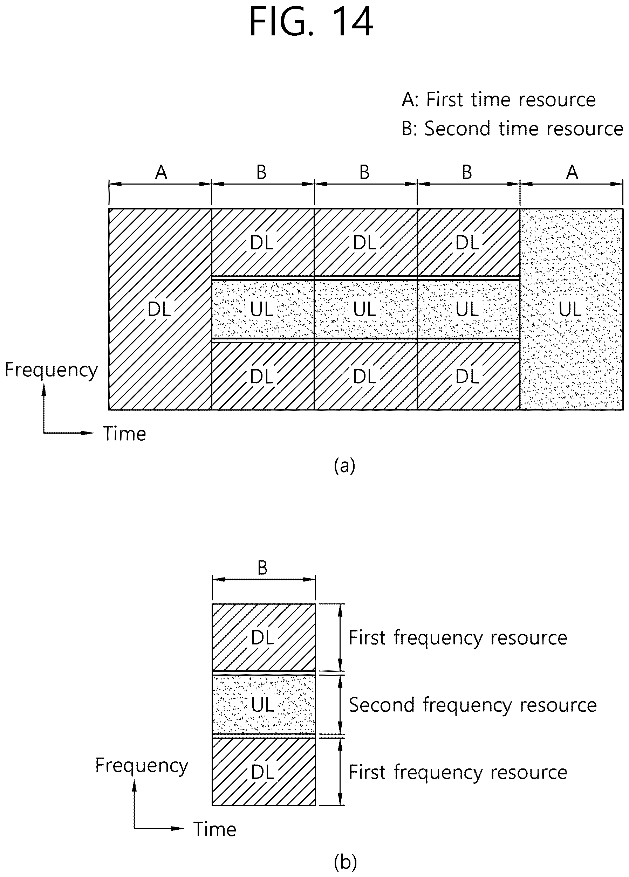

FIG. 14 shows examples of a first time resource, a second time resource, a first frequency resource, and a second frequency resource.

Referring to (a) of FIG. 14, in the first time resource (represented by A), the device is operated in HD. In the second time resource (represented by B), for example, the device may be operated as SBFD. In the first time resource, the resource indicated by DL corresponds to the above-described 1-1 time resource, and the resource indicated by UL corresponds to the above-described 1-2 time resource.

Referring to (b) of FIG. 14, in the second time resource, the frequency resource operating as DL corresponds to the above-described first frequency resource, and the frequency resource operating as UL corresponds to the above-described second frequency resource.

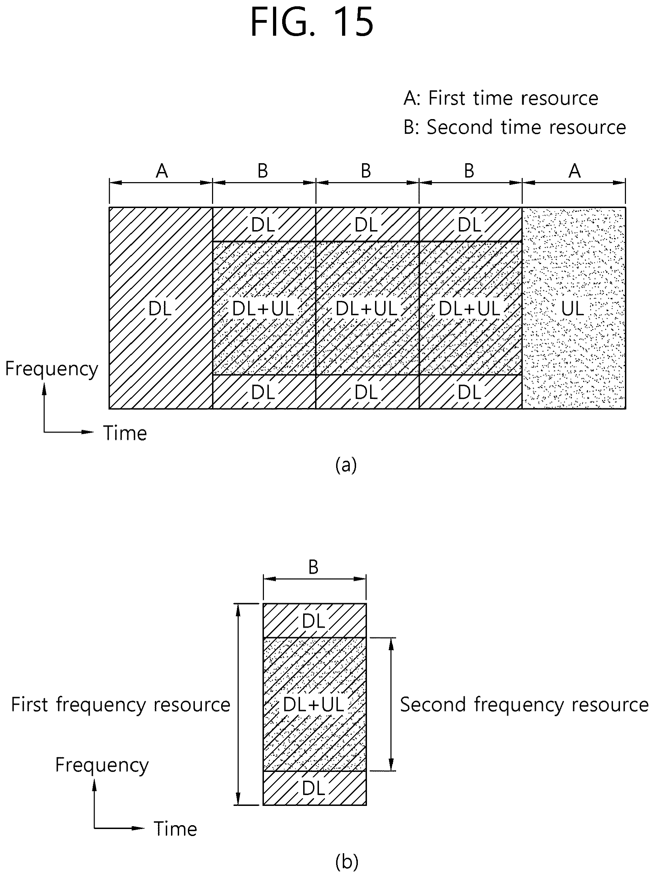

FIG. 15 shows another example of a first time resource, a second time resource, a first frequency resource, and a second frequency resource.

Referring to (a) of FIG. 15, in the first time resource (denoted by A), the device operates as a half-duplex. In the second time resource (labelled B), the device may operate, for example, as an SSFD. In the first time resource, the resource denoted DL corresponds to the first time resource described above, and the resource denoted UL corresponds to the second time resource described above.

Referring to (b) of FIG. 15, in the second time resource, the frequency resources operating as DL and DL+UL correspond to the first frequency resource described above, and the frequency resources operating as DL+UL correspond to the second frequency resource described above.

The first frequency resource and/or the second frequency resource may have all or some of the following characteristics.

1) When performing SBFD operation, the first frequency resource and the second frequency resource do not overlap with each other. This is to ensure that DL and UL operations are performed through different frequency resources. At this time, there may be frequency resources that do not correspond to both the first and second frequency resources, and these frequency resources are called guard subbands or guard frequency resources. These guard frequency resources may be needed to reduce interference from DL transmission on UL reception. The guard frequency resource may be located between the first frequency resource and the second frequency resource.

2) When performing SSFD operation, the first frequency resource and the second frequency resource may overlap. At this time, there may be frequency resources that do not correspond to both the first and second frequency resources, and these frequency resources are called guard subbands or guard frequency resources. These guard frequency resources may be needed to reduce interference from DL transmission on adjacent carriers to UL reception and/or to reduce interference from DL transmission on UL reception on adjacent carriers.

3) When performing an SBFD operation, the second frequency resource may be composed of contiguous frequency resources, and the first frequency resource may be composed of non-contiguous frequency resources. At this time, the first frequency resource may be composed of a plurality of non-contiguous sets (for example, two), and each set may be composed of contiguous frequency resources. This is to reduce interference from DL transmission on adjacent carriers to UL resources by placing the second frequency resource used for UL at the center of the frequency resources constituting the cell. Conversely, the first frequency resource may be composed of contiguous frequency resources, and the second frequency resource may be composed of non-contiguous frequency resources. At this time, the second frequency resource may be composed of multiple (e.g., two) non-contiguous sets and each set may be composed of contiguous frequency resources. This is to reduce interference from DL transmission on UL resources in adjacent carriers by placing the second frequency resource used for DL at the center of the frequency resources constituting the cell.

4) When performing SSFD operation, the second frequency resource may be composed of some frequency resources of the first frequency resource. At this time, the second frequency resource may be configured to have fewer X physical resource blocks (PRBs) on one or both edges of a carrier than the first frequency resource. This is to reduce interference from DL transmission on adjacent carriers to UL reception.

The network determines the 'first time resource' and 'second time resource', and the 'first frequency resource' and 'second frequency resource' as described above, and provides all or part of the corresponding information to the UE.

For the FD (SBFD and/or SSFD) operation of the cell, the UE may determine information about the time resources (hereinafter referred to as SBFD symbols) that operate as SBFD (and/or SSFD). For this purpose, information about the SBFD symbol may be set to the UE from the network.

When a specific time resource is set as a time resource operating in SBFD (SBFD symbol), both DL and UL resources may exist in that time resource. In this case, if there is no UL signal for the base station to receive in that time resource, the base station may only perform DL transmissions. In SBFD resources, DL transmission is only within the DL subband. Therefore, even if there is no UL signal transmitted in the UL subband, DL transmission may only be performed within the DL subband.

In this case, if the base station has no UL transmissions to receive, even if the specific time resource is a resource determined to be SBFD symbol, it may consider performing DL transmissions outside the DL subband as well as in the DL subband to improve DL throughput. That is, it may consider performing DL transmissions in the full band.

That is, in resources determined to be SBFD symbols, it may consider a fallback to TDD operation where DL or UL operation is performed over the full band, rather than SBFD operation over DL/UL subbands.

The UE can perform the same TDD operation (half duplex operation) as an existing UE in resources that are not determined to be SBFD symbols. That is, only DL or UL operations can be performed using all frequency resources of the cell.

In the present disclosure, a time resource operating as SBFD or an SBFD symbol may mean a 'second time resource'. In addition, in the present disclosure, a time resource operating as TDD, a time resource operating as HD, a TDD symbol, or an HD symbol may mean a 'first time resource'.

The DL subband mentioned in the present disclosure may mean the 'first frequency resource'. In addition, the UL subband mentioned in the present disclosure may mean the 'second frequency resource'.

Below, a method for determining frequency resource locations of DL subbands and/or UL subbands during intra-carrier full duplex operation is proposed.

The present disclosure assumes SBFD operation where a cell performs DL and UL simultaneously using different frequency resources (e.g., subbands) in the same time resource. However, the contents of the present disclosure can also be applied when a cell performs SS-FD operation.

The present disclosure may include the following UE operations.

When a UE performs DL reception in an SBFD symbol, i) the UE can perform DL reception using frequency resources within a DL subband. The UE can perform DL reception using frequency resources within a DL subband within a DL BWP. ii) the UE does not perform DL reception in frequency resources other than the DL subband. The UE does not perform DL reception using frequency resources other than the DL subband within the DL BWP.

When a UE performs UL transmission in an SBFD symbol, i) the UE can perform UL transmission using frequency resources within a UL subband. The UE can perform UL transmission using frequency resources within a UL subband within a UL BWP. ii) the UE does not perform UL transmission in frequency resources other than a UL subband. The UE does not perform UL transmission using frequency resources other than a UL subband within a UL BWP.

In general, a UE can perform DL reception within a DL subband and UL transmission within a UL subband in a time resource where the UE determines that the cell operates in SBFD. However, if a gNB (base station) performs only DL transmission or UL reception in a time resource where the UE determines that the cell operates in SBFD, or if necessary, it may consider performing DL transmission or UL reception (capable of scheduling DL or UL) over the entire band.

Additionally/independently, the present disclosure proposes a method for determining frequency resource locations of DL subbands, UL subbands, and/or guard subbands in a cell where a UE performs SBFD operation.

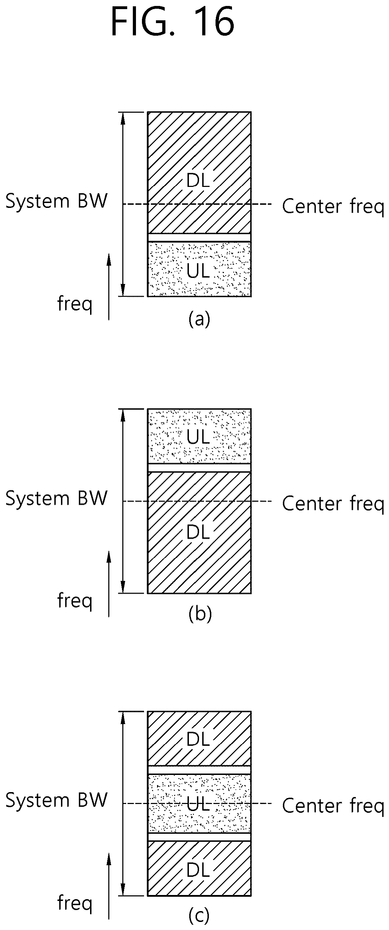

FIG. 16 shows examples of subband configurations.

In FD time resources (e.g., SBFD symbols), DL subbands and UL subbands can be configured as follows.

1) When one subband is composed of continuous frequency resources, one UL subband and one DL subband can be set within the system BW. One UL subband is composed of continuous frequency resources, and one DL subband can also be composed of continuous frequency resources. In this case, the UL subband may be located at the bottom (lower frequency side) or top (higher frequency side) of the system BW, and the DL subband may be located on the opposite side of the UL subband within the system BW. This is illustrated in (a) and (b) of FIG. 16.

2) When one subband is composed of continuous frequency resources, one UL subband and two DL subbands may exist within the system BW. Or, one UL subband may be composed of continuous frequency resources, and each of the two DL subbands may also be composed of continuous frequency resources. As shown in (c) of FIG. 16, the two DL subbands may be viewed as having two sets of contiguous frequency resources, wherein the two sets may be spaced apart from each other. The UL subband may be located in the center or middle portion of the system BW, and the DL subbands may be located at either edge (bottom and top) of the system BW. An example of such a subband configuration is shown in (c) of FIG. 16.

<Section 5.0 Subcarrier spacing for DL/UL/guard subband configuration>

Since the cell performs UL reception through the UL subband and DL transmission through the DL subband in the time resource where it operates as FD (SBFD is explained as an example, the same applies hereinafter), information about UL subband and DL subband resources can be applied equally to all SBFD UEs within the same cell. Additionally, the UL subband and DL subband can have the following characteristics.

Semi-static configuration of subband frequency locations for SBFD operation, frequency locations of UL/DL subbands are based on the CRB grid.

The maximum number of UL subbands for SBFD operation in SBFD symbols (excluding legacy UL symbols) within a TDD carrier can be 1.

The same subband frequency resources can be applied equally across multiple SBFD symbols as a criterion for semi-static configurations.

With respect to frequency resources on which a cell operates, information on DL frequency resources of a DL carrier of the cell and UL frequency information of a UL carrier can be set via information elements (IEs, for example, FrequencyInfoDL IE providing basic parameters of a downlink carrier and transmission, FrequencyInfoUL IE providing basic parameters of an uplink carrier and transmission). The information elements can be provided to a UE via an RRC message or system information.

Within FrequencyInfoDL IE and FrequencyInfoUL IE, information about frequency resources composing the corresponding carrier per subcarrier spacing (SCS) can be set through SCS-SpecificCarrier IE. SCS-SpecificCarrier IE provides parameters that determine the location and width of the actual carrier or the carrier bandwidth, and specifically defines the numerology (e.g., subcarrier spacing (SCS)) and the relationship with Point A (frequency offset).

The SCS-SpecificCarrier IE may contain the following information:

i) SubcarrierSpacing: Subcarrier spacing of a carrier, which can be used to convert offsetToCarrier to an actual frequency.

ii) offsetToCarrier: The offset in the frequency domain between Point A (the lowest subcarrier of common RB 0, the same applies hereinafter) and the lowest subcarrier available for this carrier (using the subcarrier spacing defined for this carrier) expressed in the number of PRBs.

iii) carrierBandwidth: The bandwidth of the carrier is expressed in the number of PRBs (using the subcarrier spacing defined for this carrier).

As seen above, the DL and UL frequency resources constituting a specific cell may vary depending on the applied SCS.

Meanwhile, the location of point A (absoluteFrequencyPointA) set through FrequencyInfoDL IE and FrequencyInfoUL IE is applied equally regardless of SCS within the same carrier.

Table 5 shows an example of the FrequencyInfoDL IE.

[Table 5]

```
FrequencyInfoDL

FrequencyInfoDL information element
-- ASN1START
-- TAG-FREQUENCYINFODL-START

FrequencyInfoDL ::=                SEQUENCE {
    absoluteFrequencySSB                                              ARFCN-ValueNR
OPTIONAL,     -- Cond SpCellAdd
    frequencyBandList            MultiFrequencyBandListNR,
    absoluteFrequencyPointA        ARFCN-ValueNR,
    scs-SpecificCarrierList        SEQUENCE (SIZE (1..maxSCSs)) OF SCS-SpecificCarrier,
    ...
}

-- TAG-FREQUENCYINFODL-STOP
-- ASN1STOP
```

In Table 5, 'absoluteFrequencySSB' indicates the frequency of SSB to be used for this serving cell. SSB-related parameters (e.g., SSB index) provided for the serving cell may refer to this SSB frequency unless otherwise stated.

'frequencyBandList' is a list containing the frequency bands to which this carrier belongs.

'absoluteFrequencyPointA' indicates the absolute frequency position of the reference resource block (common RB 0). The lowest subcarrier of the reference resource block is also called Point A.

'scs-SpecificCarrierList' represents a set of carriers for different subcarrier spacings (SCS) and is defined with respect to point A. A network can set a scs-SpecificCarrier for each SCS used in the BWP. In the present disclosure, 'scs-SpecificCarrierList' may include multiple 'SCS-SpecificCarriers', and in Table 5, each 'SCS-SpecificCarrier' may define downlink subband frequency resources for different subcarrier spacings (SCSs). That is, 'SCS-SpecificCarrier' can set/define first downlink subband frequency resources for the first SCS and second downlink subband frequency resources for the second SCS.

Table 6 shows an example of the FrequencyInfoUL IE.

[Table 6]

```
FrequencyInfoUL


FrequencyInfoUL information element
-- ASN1START
-- TAG-FREQUENCYINFOUL-START


FrequencyInfoUL ::=                    SEQUENCE {
    frequencyBandList      MultiFrequencyBandListNR                        OPTIONAL,    -- Cond
FDD-OrSUL
    absoluteFrequencyPointA  ARFCN-ValueNR                                 OPTIONAL,    --
Cond FDD-OrSUL
    scs-SpecificCarrierList          SEQUENCE (SIZE (1..maxSCSs)) OF SCS-SpecificCarrier,
    additionalSpectrumEmission                                AdditionalSpectrumEmission
OPTIONAL,    -- Need S
    p-Max                                                                            P-Max
OPTIONAL,    -- Need S
    frequencyShift7p5khz                                    ENUMERATED    {true}
OPTIONAL,    -- Cond FDD-TDD-OrSUL-Optional
    ...
}


-- TAG-FREQUENCYINFOUL-STOP
-- ASN1STOP
```

In Table 6, 'scs-SpecificCarrierList' represents a set of carriers for different subcarrier spacings (SCS) and is defined with respect to point A. A network can set a scs-SpecificCarrier for each SCS used in the BWP. In the present disclosure, 'scs-SpecificCarrierList' may include multiple 'SCS-SpecificCarriers'. In Table 6, each 'SCS-SpecificCarrier' may define uplink subband frequency resources for different subcarrier spacings (SCSs). That is, 'SCS-SpecificCarrier' can set/define first uplink subband frequency resources for the first SCS and second uplink subband frequency resources for the second SCS.

Table 7 shows an example of an SCS-SpecificCarrier IE.

[Table 7]

```
SCS-SpecificCarrier


SCS-SpecificCarrier information element
-- ASN1START
-- TAG-SCS-SPECIFICCARRIER-START


SCS-SpecificCarrier ::=          SEQUENCE {
    offsetToCarrier               INTEGER (0..2199),
    subcarrierSpacing             SubcarrierSpacing,
```

```
     carrierBandwidth                    INTEGER (1..maxNrofPhysicalResourceBlocks),

     ...,

     [[

     txDirectCurrentLocation            INTEGER (0..4095)                              OPTIONAL

-- Need S

     ]]

}


-- TAG-SCS-SPECIFICCARRIER-STOP

-- ASN1STOP
```

In Table 7, 'offsetToCarrier' gives the frequency-domain offset in PRBs between point A (the lowest subcarrier of common RB 0) and the lowest usable subcarrier on this carrier (using subcarrierSpacing defined for this carrier).

'subcarrierSpacing' gives the subcarrier spacing of this carrier. It can be used to convert 'offsetToCarrier' to the actual frequency. It is also possible to apply only certain values depending on the frequency used.

'carrierBandwidth' informs(indicates) the width of the carrier (using subcarrierSpacing defined for this carrier) expressed in number of PRBs.

As seen above, since the frequency resources constituting the cell are determined according to the SCS, the UE can determine the lowest frequency location (hereinafter referred to as the lower boundary), the highest frequency location (hereinafter referred to as the upper boundary), and the number of RBs constituting the carrier (hereinafter referred to as system BW) of the DL/UL carrier according to the BWP on which it operates (more specifically, according to the SCS of the BWP on which the UE operates).

Considering the characteristics of frequency resources constituting the above cells, when a UE is configured with frequency resources constituting UL subbands, DL subbands, and/or guard subbands from a network, it is necessary to know based on which SCS this information is set.

In consideration of this, the present disclosure can set and determine frequency resources constituting UL subbands, DL subbands, and/or guard subbands based on SCS as disclosed below.

<SCS determination method for sub-band configuration/determination>

Method 1. The UE is configured with subband information based on a specific reference SCS (based on the reference SCS).

In order to determine frequency resources constituting the UL subband, the DL subband, and/or the guard subband, the UE may receive configuration information (hereinafter, also referred to as subband configuration information) for frequency resources of the UL subband, the DL subband, and/or the guard subband from the network. At this time, this configuration information can be set based on a specific reference SCS. When the UE determines the frequency resource indicated by this configuration information, it interprets/determines the information based on the corresponding reference SCS.

The UE can determine the reference SCS as follows.

Alt 1. When the UE is configured with the subband configuration information, it can also be configured with information about the reference SCS.

When a UE is independently configured with subband configuration information for a UL subband and subband configuration information for a DL subband, reference SCS information may be independently configured for the UL subband and the DL subband. Alternatively, reference SCS information common to the UL subband and the DL subband may be applied.

Alt 2. The UE can determine the SCS applied to a specific BWP as the reference SCS. For example, the SCS set in the initial BWP or default BWP of the UE can be determined as the reference SCS.

Alternatively, the UE may be configured with a BWP ID from the network to determine a reference SCS, and determine the SCS used for the BWP corresponding to the BWP ID as the reference SCS. If the UE is independently configured with subband configuration information for the UL subband and subband configuration information for the DL subband, the reference SCS information may be independently determined for the UL subband and the DL subband. For example, for a UL subband, the SCS applied to the UL BWP can be applied as the reference SCS, and for a DL subband, the SCS applied to the DL BWP can be applied as the reference SCS.

Alt 3. If the reference SCS is smaller than the SCS applied by the UE, the UE may be configured with subband information so that only some of the frequency resources constituting the PRB are included in the subband according to the subband configuration. Considering this, the UE may determine the largest SCS as the reference SCS. In this case, the largest SCS may specifically mean the following.

1) It may mean the largest SCS supported by NR. Additionally, it may mean the largest SCS among the SCSs supported by the UE in the frequency range in which the cell operates (e.g., FR1, FR2).
2) It may mean the largest SCS supported by the cell. Specifically, when the largest value among the subcarrierSpacing values in each SCS-SpecificCarrier included in the scs-SpecificCarrierList of FrequencyInfoDL is defined as the largest SCS in the downlink, and the largest value among the subcarrierSpacing values in each SCS-SpecificCarrier included in the scs-SpecificCarrierList of FrequencyInfoUL is defined as the largest SCS in the uplink, it may mean the larger value between the largest SCS in the downlink and the largest SCS in the uplink.
Alternatively, since the SCS supported by the cell may be different for the DL carrier and the UL carrier, the largest SCS may be determined independently for the DL subband and the UL subband. For the DL subband, it may mean the largest SCS of the downlink, and for the UL subband, it may mean the largest SCS of the uplink.
3) It may mean the largest SCS that the UE operates in the cell. Specifically, it may mean the SCS with the largest value among the SCSs applied to each BWP for the BWPs configured to the UE in the cell. When, among the SCSs applied to the DL BWPs of the UE, the SCS with the largest value is referred to as the largest SCS of the DL BWP, and when, among the SCSs applied to the UL BWPs of the UE, the SCS with the largest value is referred to as the largest SCS of the UL BWP, it may mean the larger value between the largest SCS of the DL BWP and the largest SCS of the UL BWP.

Alternatively, considering that the SCS applied to DL BWP and UL BWP may be different, the largest SCS can be determined independently for DL subbands and UL subbands. For the DL subband, it can mean the largest SCS of the DL BWP, and for the UL subband, it can mean the largest SCS of the UL BWP.

Alt 4. Frequency resources that constitute a carrier are set for each SCS for a specific carrier, and in this case, the larger the SCS, the narrower the frequency resources the carrier is set to include. In consideration of this, if the reference SCS is greater than the SCS applied by the UE, the frequency resources constituting the carrier corresponding to the reference SCS may not include some of the frequency resources constituting the carrier corresponding to the SCS applied by the UE. Considering this, the UE can determine the smallest SCS as the reference SCS. In this case, the smallest SCS can specifically mean the following.

1) It may mean the smallest SCS supported by NR. Additionally, it may mean the smallest SCS among the SCSs supported by the UE in the frequency range in which the cell operates (e.g., FR1, FR2).
2) It may mean the smallest SCS supported by the cell. Specifically, when the smallest value among the subcarrierSpacing values in each SCS-SpecificCarrier included in the scs-SpecificCarrierList of FrequencyInfoDL is referred to as the smallest SCS of the downlink, and the smallest value among the subcarrierSpacing values in each SCS-SpecificCarrier included in the scs-SpecificCarrierList of FrequencyInfoUL is referred to as the smallest SCS of the uplink, it may mean the larger value between the smallest SCS of the downlink and the smallest SCS of the uplink.
Alternatively, since the SCS supported by the cell may be different for the DL carrier and the UL carrier, the smallest SCS may be determined independently for the DL subband and the UL subband. For the DL subband, it may mean the smallest SCS of the downlink, and for the UL subband, it may mean the smallest SCS of the uplink.
3) It may mean the smallest SCS that the UE operates in the cell. Specifically, it may mean the SCS with the smallest value among the SCSs applied to each BWP for the BWPs configured to the UE in the cell. When, among the SCSs applied to the DL BWPs of a UE, the SCS with the smallest value is referred to as the DL BWP smallest SCS, and when, among the SCSs applied to the UL BWPs of a UE, the SCS with the smallest value is referred to as the UL BWP smallest SCS, it can mean the smaller one between the DL BWP smallest SCS and the UL BWP smallest SCS.

Alternatively, considering that the SCS applied to DL BWP and UL BWP may be different, the smallest SCS can be determined independently for DL subbands and UL subbands. For the DL subband, it may mean the DL BWP smallest SCS, and for the UL subband, it may mean the UL BWP smallest SCS.

When applying this method, if the subband configuration information is set only for the UL subband or the DL subband, or if the subband configuration information is set independently for the UL subband and the DL subband, i) the subband configuration information for the UL subband may be set by being included in, for example, the FrequencyInfoUL IE or the UplinkConfigCommon IE, and ii) and/or the subband configuration information for the DL subband may be set by being included in the FrequencyInfoDL IE or the DownlinkConfigCommon IE. UplinkConfigCommon IE may include FrequencyInfoUL IE as an information element providing common uplink parameters of the cell, and DownlinkConfigCommon IE may include FrequencyInfoDL IE as an information element providing common downlink parameters of the cell.

When the subband configuration information is configured to be combined for the UL subband and the DL subband, or is commonly applied to the UL subband and the DL subband, the subband configuration information may be configured by being included in, for example, the FrequencyInfoUL IE or the UplinkConfigCommon IE. Alternatively, the subband configuration information may be configured by being included in the ServingCellConfigCommon IE.

Additionally, if the UE is configured with information about the reference SCS from the network as in Alt 1 above, the information can be applied, otherwise, the reference SCS can be determined using the methods of Alt 2, 3, and 4 above. For example, if the UE receives reference SCS information used to determine subband information from the network, the UE determines the value as the reference SCS, otherwise, the UE can determine the smallest SCS as the reference SCS, such as Alt 4.

Method 2. The UE determines subband information based on the SCS applied to the BWP.

The UE is configured with SCS-specific subband information from the network to determine frequency resources constituting the UL subband, DL subband, and/or guard subband. Based on this, when the UE operates in a specific BWP, it determines and applies the subband information corresponding to the SCS applied to the BWP as the subband information in the BWP.

More specifically, in a specific DL BWP, the UE determines and applies subband information based on subband information corresponding to an SCS applied to a specific DL BWP. In a specific UL BWP, the UE determines and applies subband information based on subband information corresponding to an SCS applied to a specific UL BWP.

For example, the UE can be configured with subband configuration information #N for SCS#N and subband configuration information #M for SCS#M through the subband configuration information. If the SCS applied to DL BWP#L is SCS#N, the UE determines the subband applied in DL BWP#L based on the subband configuration information #N. If the SCS applied to DL BWP#L is SCS#M, the UE determines the subband applied in DL BWP#L based on the subband configuration information #M.

To apply this method, subband configuration information can be set independently for each SCS.

When the subband configuration information is set only for the UL subband or the DL subband, or when the subband configuration information is set independently for the UL subband and the DL subband, at least one of the following methods may be applied.

i) Subband configuration information for each SCS for a UL subband can be configured, for example, by being included in the FrequencyInfoUL IE or the UplinkConfigCommon IE. Or, for example, subband configuration information for the UL subband applied to the corresponding SCS can be included through the SCS-SpecificCarrier for each SCS configured with the FrequencyInfoUL IE.

ii) And/or subband configuration information for each SCS for the DL subband may be included and configured in the FrequencyInfoDL IE or DownlinkConfigCommon IE. Alternatively, for example, subband configuration information for the DL subband applicable to the SCS may be included through the SCS-SpecificCarrier for each SCS configured in the FrequencyInfoDL IE.

When the subband configuration information is configured to be combined for the UL subband and the DL subband, or is commonly applied to the UL subband and the DL subband, i) the subband configuration information per SCS may be configured by being included in, for example, the FrequencyInfoUL IE or the UplinkConfigCommon IE. Or, for example, the subband configuration information applied to the corresponding SCS may be included through the SCS-SpecificCarrier per SCS configured with the FrequencyInfoUL IE. ii) Or, the subband configuration information per SCS may be configured by being included in the ServingCellConfigCommon IE.

<Section 5.1. Method for determining frequency resources constituting UL subbands>

This section describes how a UE determines the frequency resources that constitute a UL subband.

A. The UE is configured with frequency resource information constituting the UL subband from the network.

The UE receives frequency resource information constituting the UL subband from the network. Through this, the UE determines the frequency resources constituting the UL subband within the system BW.

The SCS applied to determine the frequency resource of a UL subband based on the subband configuration information for the UL subband may follow Method 1 or Method 2 proposed in Section 5.0 above.

The configuration information required to determine the UL subband can be set, for example, via FrequencyInfoUL, or can be set SCS-specifically via SCS-SpecificCarrier in FrequencyInfoUL.

The following method can be specifically applied to determine the frequency resources that constitute the UL subband of a UE.

Method (a). Method using RIV (resource indication value).

Method (a)-1.

RIV can be a value determined based on the starting resource block ($RB_{start}$) and the length of the consecutively allocated resource blocks. The UE determines that consecutive RBs from the starting position to the subband size constitute a UL subband. The starting position and subband size can be as follows.

$$\text{Starting position} = O_{carrier} + RB_{start}$$

$$\text{Subband size} = L_{RB}$$

The starting position is determined based on point A (the lowest subcarrier of common RB 0, hereinafter the same). In other words, it means the relative RB offset position from point A.

The $O_{carrier}$ value can mean the offsetToCarrier set via SCS-SpecificCarrier.

The UE derives the values of $RB_{start}$ and $L_{RB}$ from the RIV value. For this, the UE is instructed of the RIV value by the network. If the RIV is not instructed, a specific default value can be used for the RIV.

The table below shows an example of determining $RB_{start}$ and $L_{RB}$ values according to RIV. The value of $N_{BWP}^{size}$ can be assumed to be 275, which is the maximum BWP size. Alternatively, the value of $N_{BWP}^{size}$ can be assumed to be a value according to the carrierBandwidth set through SCS-SpecificCarrier.

[Table 8]

---

Downlink resource allocation type 1

A downlink type 1 resource allocation field consists of a resource indication value (*RIV*) corresponding to a starting virtual resource block ($RB_{start}$) and a length in terms of contiguously allocated resource blocks $L_{RBs}$. The resource indication value is defined by

if $(L_{RBs} - 1) \leq \lfloor N_{BWP}^{size}/2 \rfloor$   then

$$RIV = N_{BWP}^{size}(L_{RBs} - 1) + RB_{start}$$

else

$$RIV = N_{BWP}^{size}(N_{BWP}^{size} - L_{RBs} + 1) + (N_{BWP}^{size} - 1 - RB_{start})$$

where $L_{RBs} \geq 1$ and shall not exceed $N_{BWP}^{size} - RB_{start}$.

---

Method (a)-2

The UE determines that consecutive RBs as many as the subband size from the starting position constitute a UL subband. At this time, considering that the subband is set as units of RBG (RB groups), the starting position and the subband size can be as follows.

$$\text{Starting position} = O_{carrier} + RBG_{start} \cdot M$$

$$\text{Subband size} = L_{RBG} \cdot M$$

The starting position is determined by point A as the reference point. That is, it means the relative RB offset position from point A.

M represents the number of RBs composing RBG. The UE can determine that the RBG size when the bandwidth part size = 275 in Table 9 below is equal to M.

Or, when the number of RBs composing the system BW of a cell is called SysRB, the RBG size when the bandwidth part size = SysRB in Table 9 can be determined to be equal to M. Additionally, the UE can determine that the carrierBandwidth set through SCS-SpecificCarrier is equal to SysRB.

Alternatively, the UE can be configured with the M value from the network.

Table 9 shows examples of nominal RBG sizes.

[Table 9]

| Bandwidth Part Size | Configuration 1 | Configuration 2 |
|:---:|:---:|:---:|
| 1 - 36 | 2 | 4 |
| 37 - 72 | 4 | 8 |
| 73 - 144 | 8 | 16 |
| 145 - 275 | 16 | 16 |

The UE derives the values of $RBG_{start}$ and $L_{RBG}$ from the RIV value. For this purpose, the UE is instructed of the RIV value from the network. If the RIV is not instructed, a specific default value can be used for the RIV.

The table below is another example of determining the values of $RBG_{start}$ and $L_{RBG}$ according to RIV.

In this case, the number of RBs composing RBG can be equal to M. When determining the values of $RBG_{start}$ and $L_{RBG}$ according to RIV according to the method of Table 10 below, the value of P can be assumed to be equal to M.

[Table 10]

Downlink resource allocation type 1

When the scheduling grant is received with DCI format 1_2, a downlink type 1 resource allocation field consists of a resource indication value (*RIV*) corresponding to a starting resource block group $RBG_{start}$=0, 1, ..., $N_{RBG}$-1 and a length in terms of virtually contiguously allocated resource block groups $L_{RBGs}$=1, ..., $N_{RBG}$, where the resource block groups are defined as in 5.1.2.2.1 with *P* defined by *resourceAllocationType1GranularityDCI-1-2* if the UE is configured with higher layer parameter *resourceAllocationType1GranularityDCI-1-2*, and *P*=1 otherwise. The resource indication value is defined by

if $(L_{RBGs} - 1) \leq \lfloor N_{RBG}/2 \rfloor$     then

$$RIV = N_{RBG}(L_{RBGs} - 1) + RBG_{start}$$

else

$$RIV = N_{RBG}(N_{RBG} - L_{RBGs} + 1) + (N_{RBG} - 1 - RBG_{start})$$

where $L_{RBGs} \geq 1$ and shall not exceed $N_{RBG} - RBG_{start}$.

The UE can determine the $O_{carrier}$ value as follows:

The $O_{carrier}$ value may mean the offsetToCarrier set via SCS-SpecificCarrier. Alternatively, the $O_{carrier}$ value may mean the CRB that is located in a lower frequency resource than the offsetToCarrier set via SCS-SpecificCarrier among the first CRBs (CRBs with the lowest index) that compose each RBG and is closest to the offsetToCarrier position. This is to ensure that the $O_{carrier}$ is always positioned according to the RBG grid. In this case, the number of RBs that compose the RBG may be equal to M.

Method (b). Starting position, subband size

Method (b)-1

The UE determines that consecutive RBs as many as the subband size from the starting position constitutes a UL subband. The starting position and the subband size can be as follows.

$$\text{Starting position} = O_{\text{carrier}} + RB_{\text{start}}$$

$$\text{Subband size} = L_{RB}$$

The starting position is determined by point A as the reference point. That is, it means the relative RB offset position from point A.

The UE can receive the $RB_{\text{start}}$ value from the network. This value can be set cell-specifically or UE-specifically via RRC signaling.

The UE can be configured with $L_{RB}$ values from the network. These values can be set cell-specifically or UE-specifically via RRC signaling.

The $O_{\text{carrier}}$ value can mean the offsetToCarrier set via SCS-SpecificCarrier, or, characteristically, the $O_{\text{carrier}}$ value can always be equal to 0.

Method (b)-2

The UE determines that consecutive RBs as many as the subband size from the starting position constitute a UL subband. At this time, considering that the subband is set as units of RBG (RB groups), the starting position and the subband size can be as follows.

$$\text{Starting position} = O_{\text{carrier}} + RBG_{\text{start}} \cdot M$$

$$\text{Subband size} = L_{RBG} \cdot M$$

The starting position is determined by point A as the reference point. That is, it means the relative RB offset position from point A.

M represents the number of RBs that make up RBG.

Alt 1. The UE may determine that the RBG size when the bandwidth part size = 275 in Table 9 is equal to M.

Alt 2. When the number of RBs composing the system bandwidth of a cell is SysRB, the RBG size when the bandwidth part size = SysRB in Table 9 can be determined to be equal to M. Additionally, the UE can determine that the carrierBandwidth set through SCS-SpecificCarrier is equal to SysRB.

Alt 3. In order to flexibly set the UL subband location, the UE can receive the M value from the network. At this time, the M value for determining the start location and the M value for determining the subband size can be set independently of each other. That is, the value of M for determining the starting position and the value of M for determining the subband size may have different values.

Additionally, separately from M for determining the subband size, the value of M for determining the starting position can always be determined to be equal to 1. This is to ensure that the starting position can be located in any RB resource so that one boundary of the UL subband can be aligned with the boundary of the frequency resource constituting the system BW, or so that the center of the UL subband can be aligned with the center of the system BW.

The UE can be configured with the $RBG_{\text{start}}$ value from the network. This value can be set cell-specifically or UE-specifically via RRC signaling.

The UE can be configured with the $L_{RBG}$ value from the network. This value can be set cell-specifically or UE-specifically via RRC signaling.

The UE can determine the $O_{\text{carrier}}$ value as follows:

1) The $O_{\text{carrier}}$ value may mean the offsetToCarrier set via SCS-SpecificCarrier. 2) Or, the $O_{\text{carrier}}$ value may mean the CRB that is located in a lower frequency resource than the offsetToCarrier set via SCS-SpecificCarrier among the first CRBs (CRBs with the lowest index) that compose each RBG and is closest to the offsetToCarrier position. This is to ensure that the $O_{\text{carrier}}$ is always positioned according to the RBG grid. In this case, the number of RBs that compose the RBG may be equal to M.

Method (b)-3

The UE determines that consecutive RBs as many as the subband size from the starting position constitute a UL subband. At this time, considering that the size of the subband is set in units of RBG (RB groups) and the starting position is set in units of RBs, the starting position and subband size can be as follows.

$$\text{Start position} = O_{carrier} + RBG_{start} \cdot M + RB_{offset,1}$$

$$\text{Subband size} = L_{RBG} \cdot M + RB_{offset,2}$$

The starting position is determined by point A as the reference point. That is, it means the relative RB offset position from point A.

The UE can receive $RB_{offset,1}$ and $RB_{offset,2}$ values from the network. The $RB_{offset,1}$ value is a parameter required to set the start position in RB units and indicates the number of RBs. The $RB_{offset,2}$ value is a parameter required to set the subband size in RB units and indicates the number of RBs.

The $RB_{offset,1}$ and $RB_{offset,2}$ values can each be set between 0 and M-1.

Alternatively, the $RB_{offset,2}$ value can always be equal to 0. That is, the subband position can be set in RB units, but only the subband size can be set in RBG units. This value can be set cell-specifically or UE-specifically via RRC signaling.

The method by which the UE determines M, $RBG_{start}$, $L_{RBG}$, and/or $O_{carrier}$ may be the same as in the method (b)-2 above.

Method (c). Starting position, subband size

A UE can determine the frequency resource of a UL subband by using the subband size and location information that constitute the UL subband.

The subband size, which is the number of RBs that make up a UL subband, can be as follows.

$$\text{Subband size} = L_{RBG} \cdot M + RB_{offset}$$

M represents the number of RBs that make up RBG.

Alt 1. The UE can determine that the RBG size when the bandwidth part size = 275 in Table 9 is equal to M.

Alt 2. When the number of RBs composing the system bandwidth of a cell is SysRB, the RBG size when the bandwidth part size = SysRB in Table 9 can be determined to be equal to M. Additionally, the UE can determine that the carrierBandwidth set through SCS-SpecificCarrier is equal to SysRB.

Alt 3. To flexibly set the UL subband location, the UE can receive the M value from the network.

At this time, the value of M for determining the start position and the value of M for determining the subband size can be set independently of each other. That is, the value of M for determining the start position and the value of M for determining the subband size can have different values.

Alt 4. The M value can always be equal to 1, which means that the subband size can be set in RB units.

The UE can be configured with the $L_{RBG}$ value from the network. The value can be set cell-specifically or UE-specifically via RRC signaling.

The UE can be configured with the $RB_{offset}$ value from the network. The $RB_{offset}$ value is a parameter required to set the subband size in RB units and indicates the number of RBs.

The $RB_{offset}$ value can be set between 0 and M-1. Alternatively, the $RB_{offset}$ value can always be equal to 0. That is, only RBG unit configurations are allowed for the subband size.

These values can be set cell-specifically or UE-specifically via RRC signaling.

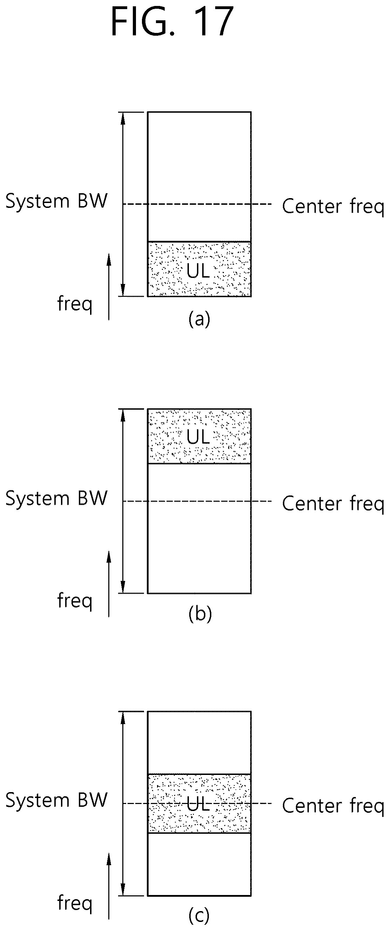

FIG. 17 illustrates location candidates for an UL subband.

The location candidates for the UL subband may include all or some of the following:

Position 1: The UL subband is located at the lower part of the system BW, as in (a) of FIG. 17. In this case, the UL subband is composed of consecutive RBs as many as the subband size from the lowest RB position of the system BW.
Position 2: As in (b) of FIG. 17, the UL subband is located at the upper part of the system BW. In this case, the UL subband is composed of RBs as many as the subband size in reverse order of the RB index from the highest RB of the system BW.
Position 3: As in (c) of FIG. 17, the UL subband is located in the middle of the system BW. In this case, the UL subband is composed of RBs in the reverse order of the RB index from the center of the system BW, which are equal to the subband size/2, and RBs in the order of the RB index, which are equal to the subband size/2.

Considering this, the UE can receive information from the network indicating the location of one of the three locations that the UL subband can have, and determine the location of the UL subband through this.

When the UE is set to position 1, the UE determines that the UL subband is composed of consecutive RBs as many as the subband size from the lowest RB position of the system BW. To this end, the UE determines that the UL subband is composed of consecutive RBs as many as the subband size from the starting position = $O_{carrier}$.

When the UE is set to position 2, the UE determines that the UL subband is composed of consecutive RBs as many as the subband size in reverse order of RB index from the highest RB position of the system BW. To this end, the UE determines that the UL subband is composed of consecutive RBs as many as the subband size from the start position = $O_{carrier}$ + SysRB - subband size + 1. Alternatively, the UE determines that the UL subband is composed of consecutive RBs as many as the subband size in reverse order of RB index from the start position = $O_{carrier}$ + SysRB.

When the UE is set to position 3, the UE determines that the UL subband is composed of consecutive RBs as many as the subband size/2 in reverse order of RB index from the center frequency position of the system BW and consecutive RBs as many as the subband size/2 in order of RB index.

To this end, the UE determines that the UL subband consists of consecutive RBs as many as the subband size from the starting position = $O_{carrier}$ + (SysRB - subband size)/2.

Or, for this, the UE determines that the UL subband is composed of consecutive RBs as many as the subband size/2 in reverse order of RB index from the starting position 1 = $O_{carrier}$ + SysRB/2 - 1 and consecutive RBs as many as the subband size/2 in order of RB index from the starting position 2 = $O_{carrier}$ + SysRB/2.

For this, the $O_{carrier}$ value can mean the offsetToCarrier set via SCS-SpecificCarrier. SysRB can mean the number of RBs that constitute the system BW of the cell. For this, the UE can determine that the carrierBandwidth set via SCS-SpecificCarrier is equal to SysRB. The starting position is determined based on the point A as the reference point. In other words, it means the relative RB offset position from point A.

Location information regarding where a UL subband can be located can be configured cell-specifically or UE-specifically via RRC signaling from the network.

Method (d). Boundary location

A UE can determine the frequency resource of a UL subband by using boundary location information constituting the UL subband.

Considering that a UL subband has one of three positions as in FIG. 17, for positions 1 and 2, if the frequency resources constituting a cell and one boundary location constituting the UL subband are known, the frequency resources of the UL subband can be determined. For position 3, if the boundary locations on both sides constituting the UL subband are known, the frequency resources of the UL subband can be determined.

Considering this, the UE can receive one or two boundary location information for the UL subband from the network, and determine the location of the UL subband as follows.

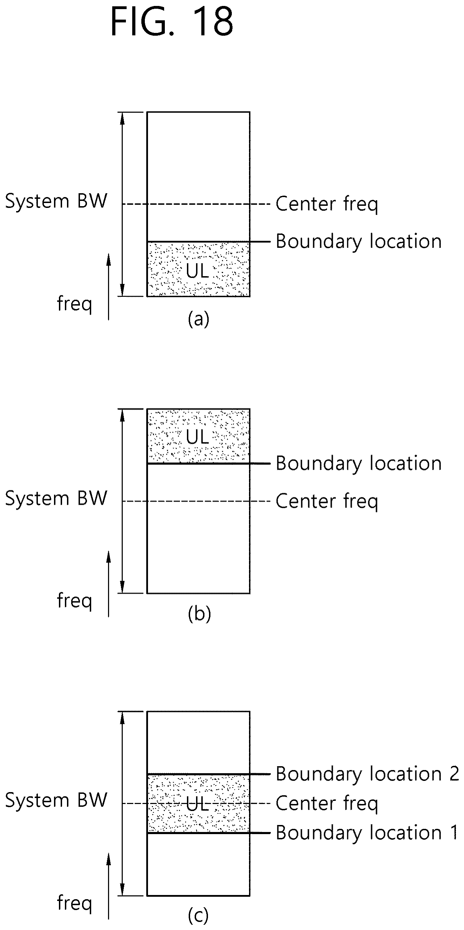

FIG. 18 shows candidate locations of an UL subband.

Referring to FIG. 18, when a UE is set with one boundary location information and the boundary location is located in a frequency resource lower than the center frequency location of the cell, the UE determines that the UL subband is composed of RB resources from the lowest RB location of the system BW to the boundary location, as in (a) of FIG. 18.

In this case, the UE determines that the UL subband consists of frequency resources from the $O_{carrier}$ to the boundary location.

Additionally, at this time, the $O_{carrier}$ position for determining the lowest RB position of the system BW can be determined based on the SCS applied by the UE in the BWP, and in the case of the boundary location, can be determined based on the reference SCS to which the subband configuration information is applied.

When a UE is configured with one boundary location information and the boundary location is located in a frequency resource higher than the center frequency location of the cell, the UE determines that the UL subband is composed of RB resources from the boundary location to the highest RB of the system BW, as in (b) of FIG. 18.

In this case, the UE determines that the UL subband consists of frequency resources from the boundary location to $O_{carrier}$ + SysRB.

At this time, the $O_{carrier}$ + SysRB position for additionally determining the highest RB position of the system BW can be determined based on the SCS applied by the UE in the BWP, and in the case of the boundary location, it can be determined based on the reference SCS to which the subband configuration information is applied.

When a UE is set with two boundary location information (i.e., boundary location 1 and boundary location 2), the UE determines that the UL subband is composed of RB resources from boundary location 1 to boundary location 2, as in (c) of FIG. 18.

At this time, additionally, for boundary locations, it can be determined based on the reference SCS that applies the subband configuration information.

Alternatively, the UE may be configured with location information of the subband and one or two boundary location information from the network, and determine the location of the UL subband as follows.

When the UE is set to position 1, the UE determines that the UL subband is composed of RB resources from the lowest RB position of the system BW to the boundary location, as in (a) of FIG. 18. To this end, the UE can be set with one boundary location information.

In this case, the UE determines that the UL subband is composed of frequency resources from the $O_{carrier}$ to the boundary location. At this time, the $O_{carrier}$ position for additionally determining the lowest RB position of the system BW can be determined based on the SCS applied by the UE in the BWP, and in the case of the boundary location, it can be determined based on the reference SCS to which the subband configuration information is applied.

When the UE is set to location 2, the UE determines that the UL subband is composed of RB resources from the boundary location to the highest RB of the system BW, as in (b) of FIG. 18. To this end, the UE can be set with one boundary location information.

In this case, the UE determines that the UL subband consists of frequency resources from the boundary location to $O_{carrier}$ + SysRB.

Additionally, at this time, the $O_{carrier}$ + SysRB position for determining the highest RB position of the system BW can be determined based on the SCS applied by the UE in the BWP, and in the case of the boundary location, it can be determined based on the reference SCS to which the subband configuration information is applied.

When the UE is set to location 3, the UE determines that the UL subband is composed of RB resources from boundary location 1 to boundary location 2, as in (c) of FIG. 18. To this end, the UE can be set with two boundary location information (i.e., boundary location 1 and boundary location 2).

At this time, additionally, for boundary locations, it can be determined based on the reference SCS that applies the subband configuration information.

For this purpose, the $O_{carrier}$ value can mean the offsetToCarrier set via SCS-SpecificCarrier. SysRB can mean the number of RBs configuring the system BW of the cell. For this purpose, the UE can determine that the carrierBandwidth set via SCS-SpecificCarrier is equal to SysRB. The boundary location is determined based on Point A (the lowest subcarrier of common RB 0). In other words, it means the relative RB offset position from Point A.

The boundary location information of a UL subband can be set cell-specifically or UE-specifically via RRC signaling from the network. More specifically, the boundary location can be as follows.

Method 1. Boundary location = $O_{carrier}$ + $RB_{offset}$

The UE can be configured with the $RB_{offset}$ value from the network. This value can be set cell-specifically or UE-specifically via RRC signaling.

Method 2. Boundary location = $O_{carrier}$ + $RBG_{offset} \cdot M$ + $RB_{offset}$

M represents the number of RBs that make up RBG.

Alt 1. The UE can determine that the RBG size when the bandwidth part size = 275 in Table 9 is equal to M.

Alt 2. When the number of RBs composing the system bandwidth (system BW) of a cell is SysRB, the RBG size when the bandwidth part size = SysRB in Table 9 can be determined to be equal to M. Additionally, the UE can determine that the carrierBandwidth set through SCS-SpecificCarrier is equal to SysRB.

Alt 3. To flexibly set the UL subband location, the UE can be configured with the M value from the network.

The UE can be configured with the $RBG_{offset}$ value from the network. This value can be set cell-specifically or UE-specifically via RRC signaling.

The UE can be configured with the $RB_{offset}$ value from the network. $RB_{offset}$ can have a value between 0 and M-1. Or, $RB_{offset}$ can always be equal to 0.

B. The UE implicitly derives frequency resource information constituting the UL subband.

The UE determines the remaining frequency resources, excluding the frequency resources constituting the DL subband within the system bandwidth (BW), as frequency resources constituting the UL subband. In this case, the UE can determine the frequency resources constituting the DL subband as in A in Section 5.2 below.

Alternatively, the UE determines the remaining frequency resources, excluding the frequency resources constituting the DL subband and the guard subband within the system bandwidth (BW), as the frequency resources constituting the UL subband. In this case, the UE can determine the frequency resources constituting the DL subband as in A in Section 5.2 below. In this case, the UE can determine the frequency resources constituting the guard subband as in A in Section 5.3 below.

<Section 5.2. Method for determining frequency resources that constitute DL subbands>

A. The UE is configured with frequency resource information for constituting the DL subband from the network.

The UE receives frequency resource information for constituting the DL subband from the network, and through this, the UE determines the frequency resources constituting the DL subband within the system BW.

In the following, it is assumed that one DL subband consists of consecutive RBs. In the case where the DL resource in an SBFD symbol consists of two sets of consecutive RBs, as in (c) of FIG. 16, the present disclosure describes that there are two DL subbands. That is, for the SBFD operation, one or two DL subbands may exist in a specific SBFD symbol.

The configuration information required to determine the DL subband can be set, for example, via FrequencyInfoDL, or can be set SCS-specifically via SCS-SpecificCarrier in FrequencyInfoDL.

The SCS applied to determine the frequency resources of a DL subband based on the subband configuration information for the DL subband may follow Method 1 or Method 2 proposed in Section 5.0 above.

To determine the frequency resources that constitute a DL subband, a UE may specifically use at least one of the following methods.

Method (a). Method using RIV (resource indication value).

Method (a)-1

When one DL subband exists, the UE determines that consecutive RBs equal to the subband size from the starting position constitute the DL subband.

When there are two DL subbands and the two DL subbands are called DL subband 1 and DL subband 2, respectively, each DL subband is composed of consecutive RBs equal to the subband size from the starting position.

Each starting position and subband size can be:

$$\text{Starting position} = O_{carrier} + RB_{start}$$

$$\text{Subband size} = L_{RB}$$

The starting position is determined based on point A as the reference point. That is, it means the relative RB offset position from point A.

The UE derives the values of $RB_{start}$ and $L_{RB}$ from the RIV value.

For this purpose, the UE is instructed with the RIV value from the network. If the RIV is not instructed, a specific default value can be used for the RIV.

For this purpose, the method of determining the values of $RB_{start}$ and $L_{RB}$ according to RIV in Table 8 can be used. In this case, the value of $N_{BWP}^{size}$ can be assumed to be 275, which is the maximum BWP size. Alternatively, the value of $N_{BWP}^{size}$ can be assumed to be the carrierBandwidth set through SCS-SpecificCarrier.

When two DL subbands exist, the UE can be configured with two RIV values. The first RIV value is used to derive the values of $RB_{start}$ and $L_{RB}$ for determining the frequency resources constituting DL subband 1, and the second RIV value is used to derive the values of $RB_{start}$ and $L_{RB}$ for determining the frequency resources constituting DL subband 2.

The $O_{carrier}$ value may mean the offsetToCarrier set via SCS-SpecificCarrier.

Method (a)-2

When one DL subband exists, the UE determines that consecutive RBs equal to the subband size from the starting position constitute the DL subband.

When there are two DL subbands and the two DL subbands are called DL subband 1 and DL subband 2, respectively, each DL subband is composed of consecutive RBs equal to the subband size from the starting position.

Each starting position and subband size can be:

$$\text{Starting position} = O_{carrier} + RBG_{start} \cdot M$$

$$\text{Subband size} = L_{RBG} \cdot M$$

The starting position is determined based on point A as the reference point. That is, it means the relative RB offset position from point A.

M represents the number of RBs that make up RBG.

The UE can determine that the RBG size when the bandwidth part size = 275 in Table 9 is equal to M. Or, when the number of RBs configuring the system BW of the cell is SysRB, the RBG size when the bandwidth part size = SysRB in Table 9 can be determined to be equal to M. Additionally, the UE can determine that the carrierBandwidth set through SCS-SpecificCarrier is equal to SysRB. Or, the UE can receive the M value from the network.

The UE derives the values of $RBG_{start}$ and $L_{RBG}$ from the RIV value. For this, the UE is instructed of the RIV value from the network. If the RIV is not instructed, a specific default value can be used for the RIV. For this, the method of determining the values of $RBG_{start}$ and $L_{RBG}$ according to the RIV in Table 10 can be used. In this case, the number of RBs constituting the RBG can be equal to M. When applying the method of determining the values of $RBG_{start}$ and $L_{RBG}$ according to the RIV in Table 10, the value of P can be assumed to be equal to M.

When two DL subbands exist, the UE can be configured with two RIV values. The first RIV value is used to derive the values of $RBG_{start}$ and $L_{RBG}$ for determining the frequency resources constituting DL subband 1, and the second RIV value is used to derive the values of $RBG_{start}$ and $L_{RBG}$ for determining the frequency resources constituting DL subband 2.

The UE can determine the $O_{carrier}$ value as follows. 1) The $O_{carrier}$ value may mean the offsetToCarrier set via SCS-SpecificCarrier. Or 2) The $O_{carrier}$ value may mean the CRB that is located in a lower frequency resource than the offsetToCarrier set via SCS-SpecificCarrier among the first CRBs (CRBs with the lowest index) that compose each RBG and is closest to the offsetToCarrier position. This is to ensure that the $O_{carrier}$ is always positioned according to the RBG grid. In this case, the number of RBs that compose the RBG may be equal to M.

Method (b). Starting position, subband size

Method (b)-1

When one DL subband exists, the UE determines that consecutive RBs equal to the subband size from the starting position constitute the DL subband.

When there are two DL subbands and the two DL subbands are called DL subband 1 and DL subband 2, respectively, each DL subband is composed of consecutive RBs equal to the subband size from the starting position.

Each starting position and subband size can be:

$$\text{Starting position} = O_{carrier} + RB_{start}$$

$$\text{Subband size} = L_{RB}$$

The starting position is determined based on point A as the reference point. That is, it means the relative RB offset position from point A.

The UE can be configured with an $RB_{start}$ value from the network. If there are two DL subbands, an independent $RB_{start}$ value can be configured for each DL subband. This value can be configured cell-specifically or UE-specifically via RRC signaling.

The UE can be configured with the $L_{RB}$ value from the network. If there are two DL subbands, independent $L_{RB}$ values can be set for each DL subband. These values can be set cell-specifically or UE-specifically via RRC signaling.

The $O_{carrier}$ value can mean the offsetToCarrier set via SCS-SpecificCarrier, or, characteristically, the $O_{carrier}$ value can always be equal to 0.

Method (b)-2

When one DL subband exists, the UE determines that consecutive RBs equal to the subband size from the starting position constitute the DL subband.

When there are two DL subbands and the two DL subbands are called DL subband 1 and DL subband 2, respectively, each DL subband is composed of consecutive RBs equal to the subband size from the starting position.

Each starting position and subband size can be:

$$\text{Starting position} = O_{carrier} + RBG_{start} \cdot M$$

$$\text{Subband size} = L_{RBG} \cdot M$$

The starting position is determined based on point A as the reference point. That is, it means the relative RB offset position from point A.

M represents the number of RBs that make up RBG.

Alt 1. The UE can determine that the RBG size when the bandwidth part size = 275 in Table 9 is equal to M.

Alt 2. When the number of RBs composing the system bandwidth of a cell is SysRB, the RBG size when the bandwidth part size = SysRB in Table 9 can be determined to be equal to M. Additionally, the UE can determine that the carrierBandwidth set through SCS-SpecificCarrier is equal to SysRB.

Alt 3. In order to flexibly set the DL subband location, the UE can be configured with the M value from the network. At this time, the M value for determining the start location and the M value for determining the subband size can be set independently of each other. That is, the M value for determining the start location and the M value for determining the subband size can have different values.

Additionally, apart from M for determining the subband size, the value of M for determining the starting position can always be determined to be equal to 1. This is to ensure that the starting position can be located in any RB resource, so that one boundary of the DL subband is aligned with the boundary of the frequency resource constituting the system BW.

The UE can be configured with the $RBG_{start}$ value from the network. If there are two DL subbands, an independent $RBG_{start}$ value can be set for each DL subband. This value can be set cell-specifically or UE-specifically via RRC signaling.

The UE can be configured with the $L_{RBG}$ value from the network. If there are two DL subbands, an independent $L_{RBG}$ value can be set for each DL subband. This value can be set cell-specifically or UE-specifically via RRC signaling.

The UE can determine the $O_{carrier}$ value as follows. The $O_{carrier}$ value can mean the offsetToCarrier set via SCS-SpecificCarrier. Or, the $O_{carrier}$ value can mean the CRB that is located in a lower frequency resource than the offsetToCarrier set via SCS-SpecificCarrier among the first CRBs (CRBs with the lowest index) that compose each RBG and is closest to the offsetToCarrier position. This is to ensure that the $O_{carrier}$ is always positioned according to the RBG grid. In this case, the number of RBs that compose the RBG can be equal to M.

Method (b)-3

When one DL subband exists, the UE determines that consecutive RBs equal to the subband size from the starting position constitute the DL subband.

When there are two DL subbands and the two DL subbands are called DL subband 1 and DL subband 2, respectively, each DL subband is composed of consecutive RBs equal to the subband size from the starting position.

Each starting position and subband size can be:

$$\text{Start position} = O_{carrier} + RBG_{start} \cdot M + RB_{offset,1}$$

$$\text{Subband size} = L_{RBG} \cdot M + RB_{offset,2}$$

The starting position is determined based on point A as the reference point. That is, it means the relative RB offset position from point A.

The UE can be configured with $RB_{offset,1}$ and $RB_{offset,2}$ values from the network. The $RB_{offset,1}$ value is a parameter required to adjust the starting position in RB units and indicates the number of RBs. The $RB_{offset,2}$ value is a parameter required to set the subband size in RB units and indicates the number of RBs.

The $RB_{offset,1}$ and $RB_{offset,2}$ values can be set between 0 and M-1. Alternatively, the $RB_{offset,2}$ value can always be equal to 0. That is, the subband position can be set in RB units, but the subband size can only be set in RBG units.

These values can be set cell-specifically or UE-specifically via RRC signaling.

The method by which the UE determines M, $RBG_{start}$, $L_{RBG}$, and/or $O_{carrier}$ may be the same as the method (b)-2 above.

Method (c). Method using starting position and subband size.

The UE can determine the frequency resource of the DL subband by using the subband size and location information that constitute the DL subband.

The subband size, which is the number of RBs that make up a DL subband, can be as follows.

$$\text{Subband size} = L_{RBG} \cdot M + RB_{offset}$$

M represents the number of RBs that make up RBG.

Alt 1. The UE can determine that the RBG size when the bandwidth part size = 275 in Table 9 is equal to M.

Alt 2. When the number of RBs composing the system bandwidth of a cell is SysRB, the RBG size when the bandwidth part size = SysRB in Table 9 can be determined to be equal to M. Additionally, the UE can determine that the carrierBandwidth set through SCS-SpecificCarrier is equal to SysRB.

Alt 3. In order to flexibly set the DL subband location, the UE can be configured with the M value from the network. At this time, the M value for determining the start location and the M value for determining the subband size can be set independently of each other. In other words, the M value for determining the start location and the M value for determining the subband size can have different values.

Alt 4. The M value may always be equal to 1, which means that the subband size can be set in RB units.

The UE can be configured with the $L_{RBG}$ value from the network. If there are two DL subbands, an independent $L_{RBG}$ value can be set for each DL subband. This value can be set cell-specifically or UE-specifically via RRC signaling.

The UE can be configured with the $RB_{offset}$ value from the network. The $RB_{offset}$ value is a parameter required to set the subband size in RB units and means the number of RBs. When two DL subbands exist, an independent $RB_{offset}$ value can be set for each DL subband. For example, the $RB_{offset}$ value can be set from 0 to M-1. Or, the $RB_{offset}$ value can always be equal to 0. That is, only the configuration of the subband size in RBG units can be allowed. This value can be set cell-specifically or UE-specifically via RRC signaling.

Location candidates for UL and DL subbands may include all or some of the following:

Position 1: As in (a) of FIG. 16, a UL subband is located at the lower part of the system BW, and one DL subband is located at the upper part of the system BW. In this case, the DL subband is composed of consecutive RBs as many as the subband size in reverse order of the RB index from the highest RB position of the system BW.

Position 2: As in (b) of FIG. 16, a UL subband is located at the upper part of the system BW, and one DL subband is located at the lower part of the system BW. In this case, the DL subband is composed of RBs equal to the subband size from the lowest RB of the system BW.

Position 3: As in (c) of FIG. 16, the UL subband is located in the middle part of the system BW. In this case, two DL subbands exist, one DL subband is composed of RBs as many as the subband size from the lowest RB of the system BW, and the other DL subband is composed of consecutive RBs as many as the subband size in reverse order of the RB index from the highest RB position of the system BW.

Considering this, the UE can be configured with information from the network indicating the location of one of the three locations that the DL subband can have, and determine the location of the DL subband through this.

When the UE is set to position 1, the UE determines that the DL subband is composed of consecutive RBs as many as the subband size in reverse order of RB index from the highest RB position of the system BW. To this end, the UE determines that the DL subband is composed of consecutive RBs as many as the subband size from the start position = $O_{carrier}$ + SysRB - subband size + 1.

Alternatively, the UE determines that the DL subband is composed of consecutive RBs as many as the subband size in reverse order of the RB index from the starting position = $O_{carrier}$ + SysRB.

When the UE is set to position 2, the UE determines that the DL subband is composed of consecutive RBs as many as the subband size in order of RB index starting from the lowest RB position in the system BW.

To this end, the UE determines that the DL subband consists of consecutive RBs as many as the subband size from the starting position = $O_{carrier}$.

When the UE is set to position 3, the UE determines that there are two DL subbands, one DL subband is composed of RBs of the subband size starting from the lowest RB of the system BW, and the other DL subband is composed of consecutive RBs of the subband size in order of RB index starting from the highest RB position of the system BW.

To this end, the UE determines that one DL subband (DL subband 1) consists of consecutive RBs as many as the subband size from the starting position = $O_{carrier}$.

Additionally, the UE determines that another DL subband (DL subband 2) is composed of consecutive RBs as many as the subband size from the starting position = $O_{carrier}$ + SysRB - subband size + 1. It determines that the UE is composed of consecutive RBs as many as the subband size in reverse order of the RB index from the starting position = $O_{carrier}$ + SysRB.

For this purpose, the $O_{carrier}$ value can mean the offsetToCarrier set via SCS-SpecificCarrier. SysRB can mean the number of RBs that constitute the system BW of the cell. For this purpose, the UE can determine that the carrierBandwidth set via SCS-SpecificCarrier is equal to SysRB. The starting position is determined based on point A as the reference point. That is, it means the relative RB offset position from point A.

The location information for a UL subband can be configured cell-specifically or UE-specifically via RRC signaling from the network.

Additionally, when applying the method (c) of Section 5.1 above to determine UL subband resources, the location information for determining UL subbands and the location information for determining DL subbands may mean the same signaling. That is, the same location information may be used to determine UL subband and DL subband resources.

Method (d). Boundary location.

The UE can determine the frequency resource of the DL subband by using the boundary location information constituting the DL subband.

Considering that the DL subband has one of three positions as in the above method (c), for positions 1 and 2, if the frequency resources constituting the cell and one boundary location constituting the DL subband are known, the frequency resources of the DL subband can be determined. For position 3, if the frequency resources constituting the cell and one boundary location for each of the two DL subbands are known, the frequency resources of the two DL subbands can be determined.

Considering this, the UE can receive one or two boundary location information for the DL subband from the network, and determine the location of the DL subband as follows.

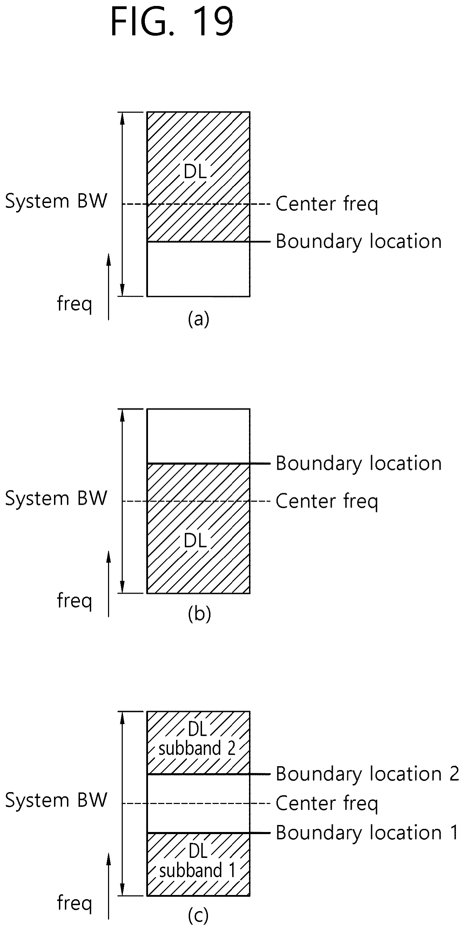

FIG. 19 shows candidate locations of DL subbands.

Referring to FIG. 19, when a UE is set with one boundary location information and the boundary location is located in a frequency resource higher than the center frequency location of the cell, the UE determines that the DL subband is composed of RB resources from the boundary location to the highest RB of the system BW, as in (a) of FIG. 19.

In this case, the UE determines that the DL subband consists of frequency resources from the boundary location to $O_{carrier}$+SysRB.

At this time, the $O_{carrier}$+SysRB position for additionally determining the highest RB position of the system BW can be determined based on the SCS applied by the UE in the BWP, and in the case of the boundary location, it can be determined based on the reference SCS to which the subband configuration information is applied.

When a UE is set with one boundary location information and the boundary location is located in a frequency resource lower than the center frequency location of the cell, the UE determines that the DL subband is composed of RB resources from the lowest RB location of the system BW to the boundary location, as in (b) of FIG. 19.

In this case, the UE determines that the DL subband consists of frequency resources from the $O_{carrier}$ to the boundary location.

At this time, the $O_{carrier}$ position for additionally determining the lowest RB position of the system BW can be determined based on the SCS applied by the UE in the BWP, and in the case of the boundary location, can be determined based on the reference SCS to which the subband configuration information is applied.

When a UE is set with two boundary location information (i.e., boundary location 1 and boundary location 2), the UE determines that two DL subbands exist, as in (c) of FIG. 19. It determines that DL subband 1 is composed of RB resources from the lowest RB location of the system BW to boundary location 1, and it determines that DL subband 2 is composed of RB resources from boundary location 2 to the highest RB of the system BW.

In this case, the UE determines that DL subband 1 is composed of frequency resources from $O_{carrier}$ to boundary location 1. The UE determines that DL subband 2 is composed of frequency resources from boundary location 2 to $O_{carrier}$ +SysRB.

At this time, the $O_{carrier}$ position for additionally determining the lowest RB position of the system BW and the $O_{carrier}$ + SysRB position for determining the highest RB position of the system BW are determined based on the SCS applied by the UE in the BWP, and in the case of the boundary location, it can be determined based on the reference SCS to which the subband configuration information is applied.

Alternatively, the UE may be configured with location information of the subband and one or two boundary location information from the network, and determine the location of the DL subband as follows.

When the UE is set to position 1, the UE determines that the DL subband is composed of RB resources from the boundary location to the highest RB of the system BW, as in (a) of FIG. 19. To this end, the UE can be set with one boundary location information.

In this case, the UE determines that the DL subband consists of frequency resources from the boundary location to $O_{carrier}$ + SysRB.

At this time, the $O_{carrier}$ + SysRB position for additionally determining the highest RB position of the system BW can be determined based on the SCS applied by the UE in the BWP, and in the case of the boundary location, it can be determined based on the reference SCS to which the subband configuration information is applied.

When the UE is set to position 2, the UE determines that the DL subband is composed of RB resources from the lowest RB position of the system BW to the boundary location, as in (b) of FIG. 19. For this purpose, the UE can be set with one boundary location information.

In this case, the UE determines that the DL subband consists of frequency resources from the $O_{carrier}$ to the boundary location.

At this time, the $O_{carrier}$ position for additionally determining the lowest RB position of the system BW can be determined based on the SCS applied by the UE in the BWP, and in the case of the boundary location, can be determined based on the reference SCS to which the subband configuration information is applied.

When the UE is set to position 3, the UE determines that there are two DL subbands, as in (c) of FIG. 19. It determines that DL subband 1 is composed of RB resources from the lowest RB position of the system BW to the boundary location, and it determines that DL subband 2 is composed of RB resources from the boundary location to the highest RB of the system BW. To this end, the UE can be set with two boundary location information (boundary location 1, boundary location 2).

In this case, the UE determines that DL subband 1 is composed of frequency resources from $O_{carrier}$ to boundary location 1. The UE determines that DL subband 2 is composed of frequency resources from boundary location 2 to $O_{carrier}$ + SysRB.

At this time, the $O_{carrier}$ position for additionally determining the lowest RB position of the system BW and the $O_{carrier}$ + SysRB position for determining the highest RB position of the system BW are determined based on the SCS applied by the UE in the BWP, and in the case of the boundary location, it can be determined based on the reference SCS to which the subband configuration information is applied.

For this, the $O_{carrier}$ value can mean the offsetToCarrier set via SCS-SpecificCarrier. SysRB can mean the number of RBs that constitute the system BW of the cell. For this, the UE can determine that the carrierBandwidth set via SCS-SpecificCarrier is equal to SysRB. The boundary location is determined based on the point A as the reference point. In other words, it means the relative RB offset position from point A.

The boundary location information of the DL subband can be set cell-specifically or UE-specifically via RRC signaling from the network.

More specifically, the boundary location can be as follows:

Method 1. Boundary location = $O_{carrier}$ + $RB_{offset}$

The UE can be configured with $RB_{offset}$ values from the network. The value can be set cell-specifically or UE-specifically via RRC signaling.

When multiple boundary locations (two) are set, an independent $RB_{offset}$ can be set for each boundary location.

Method 2. Boundary location = $O_{carrier}$ + $RBG_{offset} \cdot M$ + $RB_{offset}$

M represents the number of RBs that make up RBG.

Alt 1. The UE can determine that the RBG size when the bandwidth part size = 275 in Table 9 is equal to M.

Alt 2. When the number of RBs composing the system bandwidth of a cell is SysRB, the RBG size when the bandwidth part size = SysRB in Table 9 can be determined to be equal to M. Additionally, the UE can determine that the carrierBandwidth set through SCS-SpecificCarrier is equal to SysRB.

Alt 3. To flexibly set the DL subband location, the UE can be configured with the M value from the network.

The UE can be configured with the $RBG_{offset}$ value from the network. This value can be set cell-specifically or UE-specifically via RRC signaling.

The UE can be configured with the $RB_{offset}$ value from the network. Specifically, $RB_{offset}$ can have a value between 0 and M-1. Or specifically, $RB_{offset}$ can always be equal to 0.

When multiple boundary locations (two) are set, independent $RBG_{offset}$ values and/or $RB_{offset}$ can be set for each boundary location.

Additionally, when applying the method (d) of Section 5.1 to determine UL subband resources, 1) the location information and/or boundary location information for determining UL subbands and the location information and/or boundary location information for determining DL subbands may mean the same signaling. That is, the same location information and/or boundary location information may be used to determine UL subband and DL subband resources.

2) Or, the location information for determining the UL subband and the location information for determining the DL subband imply the same signaling, but the boundary location information can be set independently for the UL subband and the DL subband. That is, the same location information is used to determine UL subband and DL subband resources, while independent boundary location information can be used for the UL subband and the DL subband.

3) Or, the location information and/or boundary location information for determining the UL subband and the location information and/or boundary location information for determining the DL subband can be set independently of each other.

Method (e). Offset from UL subband boundary.

The UE can determine the frequency resource of the DL subband by using the relative offset information of the boundary location constituting the DL subband from the boundary of the UL subband.

Considering that the DL subband has one of three positions as in the above method (c), in the case of position 1, the frequency resource of the DL subband can be determined by knowing the frequency resource constituting the cell and the offset value between the upper boundary of the UL subband and the lower boundary of the DL subband. For position 2, the frequency resources of the DL subband can be determined by knowing the frequency resources that constitute the cell and the offset value between the lower boundary of the UL subband and the upper boundary of the DL subband. For position 3, if the frequency resources constituting the cell and the offset value between the lower boundary of the UL subband and the upper boundary of the DL subband 1 are known, the frequency resources of the DL subband 1 can be determined, and if the frequency resources constituting the cell and the offset value between the upper boundary of the UL subband and the lower boundary of the DL subband 2 are known, the frequency resources of the DL subband 2 can be determined.

Considering this, the UE can be configured with one or two boundary offset information for the DL subband from the network, and determine the location of the DL subband as follows.

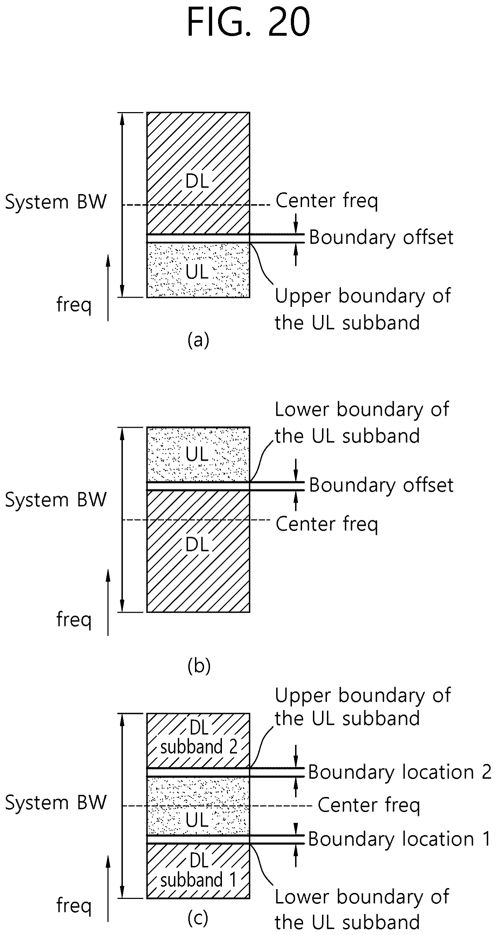

FIG. 20 illustrates candidate locations of DL subbands and UL subbands.

When a UE receives one boundary offset information and the UL subband is located at the lower end of the system BW, the UE determines that the DL subband is composed of RB resources from the upper boundary of the UL subband + boundary offset position to the highest RB of the system BW, as in (a) of FIG. 20.

In this case, the UE determines that the DL subband consists of frequency resources from the upper boundary of the UL subband + boundary offset to $O_{carrier}$ + SysRB.

When a UE receives one boundary offset information and the UL subband is located at the upper end of the system BW, the UE determines that the DL subband is composed of RB resources from the lowest RB position of the system BW to the lower boundary of the UL subband - boundary offset, as in (b) of FIG. 20.

In this case, the UE determines that the DL subband consists of frequency resources from the $O_{carrier}$ to the lower boundary of the UL subband - boundary offset.

When the UE is set with two boundary offset information (i.e., boundary offset 1 and boundary offset 2), the UE determines that two DL subbands exist, as in (c) of FIG. 20. DL subband 1 is determined to be composed of RB resources from the lowest RB position of the system BW to the lower boundary of the UL subband - boundary offset 1, and DL subband 2 is determined to be composed of RB resources from the upper boundary of the UL subband + boundary offset 2 to the highest RB of the system BW.

In this case, the UE determines that DL subband 1 consists of frequency resources from the $O_{carrier}$ to the lower boundary of the UL subband - boundary offset 1.

In this case, the UE determines that DL subband 2 consists of frequency resources from the upper boundary + boundary offset 2 to $O_{carrier}$ + SysRB.

For this, the $O_{carrier}$ value may mean the offsetToCarrier set via SCS-SpecificCarrier. SysRB can mean the number of RBs that constitute the system BW of the cell. For this, the UE can determine that the carrierBandwidth set via SCS-SpecificCarrier is equal to SysRB. The subband position is determined based on point A. In other words, it means the relative position from point A.

Boundary offset information for determining frequency resources constituting a DL subband can be set cell-specifically or UE-specifically via RRC signaling from the network. More specifically, the boundary offset can be as follows.

Method 1. Boundary offset = $RB_{offset}$

The UE can receive the $RB_{offset}$ value from the network. The value can be set cell-specifically or UE-specifically via RRC signaling.

When multiple boundary locations (two) are set, an independent $RB_{offset}$ can be set for each boundary location.

Method 2. Boundary offset = $RBG_{offset} \cdot M + RB_{offset}$

M represents the number of RBs that make up RBG.

Alt 1. The UE can determine that the RBG size when the bandwidth part size = 275 in Table 9 is equal to M.

Alt 2. When the number of RBs composing the system bandwidth of a cell is SysRB, the RBG size when the bandwidth part size = SysRB in Table 9 can be determined to be equal to M. Additionally, the UE can determine that the carrierBandwidth set through SCS-SpecificCarrier is equal to SysRB.

Alt 3. To flexibly set the DL subband location, the UE can be configured with the M value from the network.

The UE can be configured with the $RBG_{offset}$ value from the network. This value can be set cell-specifically or UE-specifically via RRC signaling.

The UE can be configured with the $RB_{offset}$ value from the network. Specifically, $RB_{offset}$ can have a value between 0 and M-1. Or specifically, $RB_{offset}$ can always be equal to 0.

When multiple boundary offsets (two) are set, independent $RBG_{offset}$ values and/or $RB_{offset}$ can be set for each boundary location.

B. The UE is configured with frequency resource information constituting the non-DL subband from the network.

In the present disclosure, frequency resources that do not constitute non-DL subbands may specifically mean the following.

1) Frequency resources excluded from configuring DL subbands when a UE determines frequency resources constituting DL subbands.

2) Frequency resources where the UE does not receive DL in the SBFD symbol or resources excluded from the configuration of DL BWP.

3) When a UE performs DL/UL operation to a subband in an SBFD symbol, a frequency resource where the UE does not receive DL or a resource excluded from the configuration of DL BWP.

The UE is configured with frequency resource information constituting the non-DL subband from the network. Through this, the UE determines frequency resources that do not constitute the non-DL subband within the system BW.

Frequency resources that do not constitute non-DL subbands may be composed of single, contiguous RBs.

The SCS applied to determine whether or not to configure a DL subband is based on frequency resource information that does not constitute a non-DL subband may follow Method 1 or Method 2 proposed in Section 5.0 above.

The configuration information required to determine non-DL subbands can be set, for example, via FrequencyInfoDL or via SCS-SpecificCarrier within FrequencyInfoDL.

To determine the frequency resources that do not constitute a non-DL subband, the UE may specifically apply the following methods

Frequency resources that do not constitute a non-DL subband may follow the method in A of section 5.1 above. More specifically, to determine frequency resources that do not constitute a non-DL subband, the method proposed in A of Section 5.1 above may be applied, substituting the UL subband for the non-DL subband.

At this time, the configuration information required to determine the UL subband and the configuration information required to determine the non-DL subband can be set/determined independently of each other.

Additionally, frequency resources corresponding to non-DL subbands can be set to always include frequency resources constituting UL subbands.

C. The UE implicitly derives frequency resource information constituting the DL subband.

The UE determines the remaining frequency resources, excluding the frequency resources constituting the UL subband within the system bandwidth (BW), as frequency resources constituting the DL subband. In this case, the UE can determine the frequency resources constituting the UL subband as in A of Section 5.1 above.

Alternatively, the UE determines the remaining frequency resources, excluding the frequency resources constituting the UL subband and guard subband within the system bandwidth (BW), as frequency resources constituting the DL subband.

In this case, the UE can determine the frequency resources constituting the UL subband as in A of Section 5.1 above. In this case, the UE can determine the frequency resources constituting the guard subband as in A of Section 5.3 below.

<Section 5.3. Method for determining frequency resources that constitute guard subbands>

A. The UE is configured with frequency resource information constituting the guard subband from the network.

B. The UE implicitly derives frequency resource information constituting the guard subband.

The UE determines the remaining frequency resources, excluding the frequency resources constituting the UL subband and DL subband within the system bandwidth (BW), as the frequency resources constituting the DL subband. In this case, the UE can determine the frequency resources constituting the UL subband as in A of Section 5.1 above. In this case, the UE can determine the frequency resources constituting the DL subband as in A of Section 5.2 above.

<Section 5.4. Subband determination method when the boundary of DL/UL subband is not aligned with the RB/RBG grid>

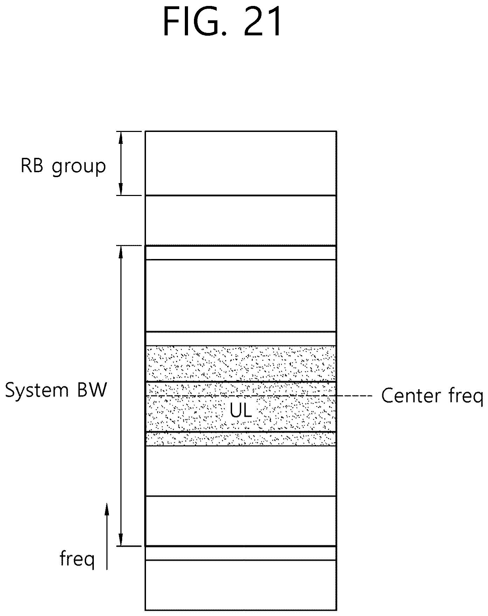

FIG. 21 shows an example where the resources constituting the UL subband are not aligned with the RBG grid.

Referring to FIG. 21, the RBG grid and the boundaries of the system BW may not be aligned. At this time, when determining the frequency resources of the UL subband as in the method (c) of the above Section 5.1 or determining the frequency resources of the DL subband as in the method (c) of the above Section 5.2, the frequency resources constituting the UL subband may not be aligned with the RBG grid as in FIG. 21. In this case, multiplexing with transmission resources of various signals/channels may not be performed efficiently.

To ensure that the boundaries of the DL/UL subbands are aligned with the RBG grid, the UE can be operated as following:

If only some RB resources are included in the frequency resources that constitute the UL/DL subband for a specific RBG where the UE operates,

Alt 1. The UE determines that the entire RB resources of the corresponding RBG are included in the corresponding subband.

Alt 2. The UE determines that the entire RB resources of the corresponding RBG are not contained in the corresponding subband.

Alt 3. If the frequency resources constituting the corresponding subband include RB resources that are more than/(or equal to or greater than) the half of the RB resources constituting the corresponding RBG, the UE determines that the entire RB resources of the corresponding RBG are included in the corresponding subband. If the frequency resources constituting the corresponding subband include RB resources that are less than/(or equal to or less than) the half of the RB resources of the corresponding RBG, the UE determines that the entire RB resources of the corresponding RBG are not included in the corresponding subband.

Alt 4. For UL subbands, the UE determines that the entire RB resources of the corresponding RBG are included in the corresponding subband. For DL subbands, the UE determines that the entire RB resources of the corresponding RBG are not included in the corresponding subband.

Alt 5. For DL subbands, the UE determines that the entire RB resources of the corresponding RBG are included in the corresponding subband. For UL subbands, the UE determines that the entire RB resources of the corresponding RBG are not included in the corresponding subband.

When a UE determines a frequency resource constituting a DL, UL, and/or guard subband based on a specific criterion as in Method 1 of Section 5.0, the RB grid for the BWP on which the UE operates and the RB grid constituting the subband may not be aligned with each other. That is, from the UE perspective, the subband resources can be set/determined so that only some of the frequency resources that constitute one PRB are included in the subband. Considering this case, in order to align the boundaries of the DL/UL subbands with the PRB grid of the UE, the following operation can be performed.

If only some of the frequency resources that constitute the PRB for a specific PRB in which the UE operates are included in the frequency resources that constitute the UL/DL subband,

Alt 1. The UE determines that the corresponding PRB is included in the corresponding subband.

Alt 2. The UE determines that the corresponding PRB is not included in the corresponding subband.

Alt 3. If the frequency resources constituting the corresponding subband include more than/(or equal to or greater than) the half of the frequency resources constituting the corresponding PRB, the UE determines that the corresponding PRB is included in the corresponding subband. If the frequency resources constituting the corresponding subband include less than/(or equal to or less than) the half of the frequency resources constituting the corresponding PRB, the UE determines that the corresponding PRB is not included in the corresponding subband.

Alt 4. For UL subbands, the UE determines that the corresponding PRB is included in the corresponding subband. For DL subbands, the UE determines that the corresponding PRB is not included in the corresponding subband.

Alt 5. For DL subbands, the UE determines that the corresponding PRB is included in the corresponding subband. For UL subbands, the UE determines that the corresponding PRB is not included in the corresponding subband.

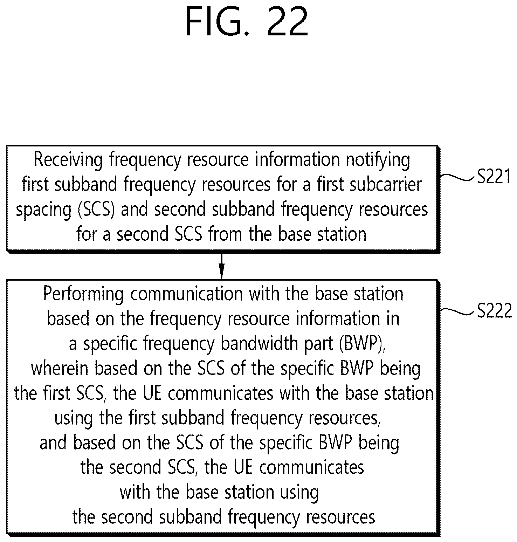

FIG. 22 illustrates an operation method of a UE in a wireless communication system.

Referring to FIG. 22, the UE receives frequency resource information from the base station (S221). The frequency resource information can be received via an RRC (radio resource control) message. Various specific examples of frequency resource information are described above in Section 5.0.

For example, frequency resource information can be provided to the UE through the SCS-SpecificCarrier described in Table 7. The SCS-SpecificCarrier can be included in FrequencyInfoDL IE, DownlinkConfigCommon IE, FrequencyInfoUL IE, UplinkConfigCommon IE, etc. Therefore, it can be seen that frequency resource information is provided through FrequencyInfoDL IE, DownlinkConfigCommon IE, FrequencyInfoUL IE, UplinkConfigCommon IE.

The SCS-SpecificCarrier may indicate subband frequency resources in an SCS-specific manner based on the fields described in Table 7, or may further include other fields used to indicate subband frequency resources in an SCS-specific manner in addition to the aforementioned fields, and may indicate SCS-specific subband frequency resources by, for example, a combination of at least one of the aforementioned fields and at least one of the aforementioned additional fields.

The frequency resource information can inform subband frequency resources for a plurality of subcarrier spacings (SCSs) specifically. For example, it can inform first subband frequency resources for a first subcarrier spacing (SCS) and second subband frequency resources for a second SCS.

According to an embodiment, each of the first subband frequency resources and the second subband frequency resources may be frequency resources constituting one uplink subband.

At this time, the frequency resource information may provide first information related to a start position and second information related to a subband size for each of the first subband frequency resources and the second subband frequency resources. At this time, the first information related to the starting position for the first subband frequency resources and the second information related to the subband size for the first subband frequency resources assume the first SCS. The first information related to the starting position for the second subband frequency resources and the second information related to the subband size for the second subband frequency resources assume the second SCS. In this way, the subband frequency resources can be SCS-specifically notified.

For example, as described in FIG. 17, the one uplink subband may start at one of three candidate starting positions in the system BW for a specific SCS. In this case, the frequency resource information may indicate a specific candidate starting position among the three candidate starting positions. The one uplink subband may be composed of resource blocks (or resource block groups) as many as the subband size at the specific candidate start location for the specific SCS.

In some embodiments, the starting position may be derived based on offsetToCarrier within the SCS-SpecificCarrier described above. The subband size may be derived based on carrierBandwidth within the SCS-SpecificCarrier.

According to an embodiment, each of the first subband frequency resources and the second subband frequency resources may be frequency resources constituting one or two downlink subbands. That is, the frequency resource information may SCS-specifically inform one or two downlink subband frequency resources for a plurality of SCSs.

For example, the frequency resource information may provide third information related to a start position and fourth information related to a subband size for each of the first subband frequency resources and the second subband frequency resources. In this case, the one downlink subband may be composed of resource blocks/(or resource block groups) as many as the subband size based on the fourth information from a start position based on the third information.

If each of the first subband frequency resources and the second subband frequency resources is a frequency resource constituting two downlink subbands, the frequency resource information may include information related to a start position and information related to a subband size for each of the two downlink subbands.

As described with reference to (c) of FIG. 19, for example, if the first subband frequency resources are frequency resources constituting two downlink subbands, the frequency resource information may provide two pieces of start position information (e.g., boundary location 1, boundary location 2).

The UE performs communication with the base station based on the frequency resource information in a specific frequency bandwidth part (BWP), and communicates with the base station using the first subband frequency resources based on the SCS of the specific BWP being the first SCS, and communicates with the base station using the second subband frequency resources based on the SCS of the specific BWP being the second SCS (S222).

Specific examples of how the UE determines the UL subband and/or DL subband based on the frequency resource information are described above in Sections 5.1 and 5.2.

According to the above-described method, the UE can accurately determine the location of the subband by reflecting the edge and center locations of the actual frequency resources that constitute the cell. Since the location of the frequency can be accurately determined even if the SCS is changed, not only the location of the subband but also, for example, the location of the frequency band that is the target of measurement can be accurately determined. Therefore, the efficiency of communication can be increased and the throughput can also be increased.

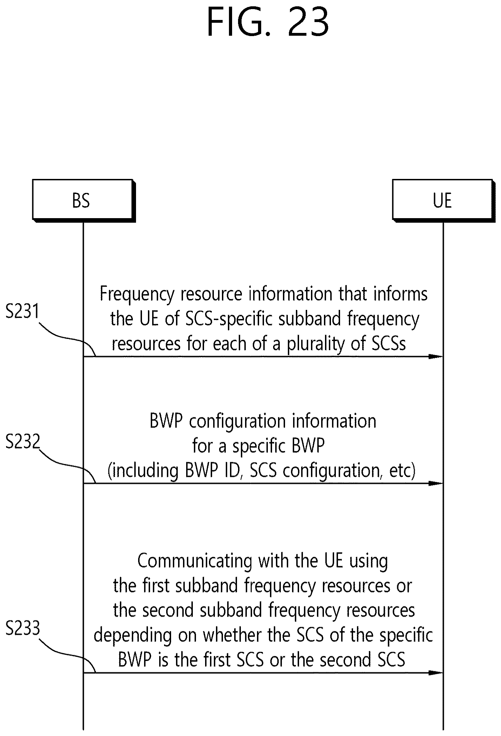

FIG. 23 illustrates a signaling and operation method between a base station and a UE in a wireless communication system.

Referring to FIG. 23, the base station transmits frequency resource information that informs the UE of SCS-specific subband frequency resources for each of a plurality of SCSs (S231).

Specific examples of frequency resource information are described in Section 5.0 above.

The frequency resource information may indicate subband frequency resources for a plurality of subcarrier spacings (SCSs) in an SCS-specific manner. For example, the first subband frequency resources for a first subcarrier spacing (SCS) and the second subband frequency resources for a second SCS may be indicated.

The base station provides the UE with BWP configuration information for a specific BWP (S232). The BWP configuration information may include information such as a BWP ID (identity) for a specific BWP and information indicating the SCS of the specific BWP.

The base station communicates with the UE using the first subband frequency resources or the second subband frequency resources depending on whether the SCS of the specific BWP is the first SCS or the second SCS (S233).

That is, the base station communicates with the UE using the first subband frequency resources based on the SCS of the specific BWP being the first SCS, and communicates with the UE using the second subband frequency resources based on the SCS of the specific BWP being the second SCS.

The above describes an example of applying SCS-specific subband configuration information based on the SCS of a specific BWP, but this is not a limitation. For example, in providing information for configuring specific frequency resources, such as information indicating time/frequency domain resources of CSI-RS, the network can provide frequency information in an SCS-specific manner. Then, when the UE determines the specific frequency resource, it can determine which SCS to apply and then apply frequency information for the determined SCS.

For example, information indicating CSI-RS time/frequency domain resources may be provided as CSI-RS configuration#1 for SCS#1, CSI-RS configuration#2 for SCS#2, ..., CSI-RS configuration#N for SCS#N. The UE can determine the SCS to be applied during CSI-RS measurement (for example, it can be determined by a specific reference SCS set by the base station, or it can be determined by the SCS of the current BWP, as described in <SCS determination method for sub-band configuration/determination>) and can know which CSI-RS configuration to apply accordingly. The UE can perform CSI-RS measurement and feedback operation according to the applied CSI-RS configuration.

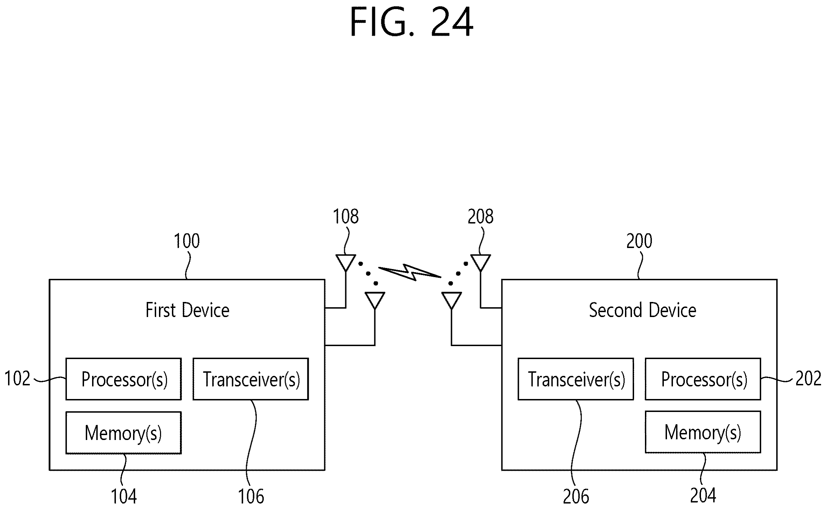

FIG. 24 illustrates a wireless device applicable to the present specification.

Referring to FIG. 24, a first wireless device 100 and a second wireless device 200 may transmit radio signals through a variety of RATs (e.g., LTE and NR).

The first wireless device 100 may include one or more processors 102 and one or more memories 104 and additionally further include one or more transceivers 106 and/or one or more antennas 108. The processors 102 may control the memory 104 and/or the transceivers 106 and may be configured to implement the descriptions, functions, procedures, proposals, methods, and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processory102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip. The processor 102 receives frequency resource information from a base station and performs a communication with the base station based on the frequency resource information in a specific bandwidth part (BWP). The frequency resource information informs of first subband frequency resources for a first subcarrier spacing (SCS) and second subband frequency resources for a second SCS. Based on an SCS of the specific BWP being the first SCS, the processor 102 communicates with the base station using the first subband frequency resources, and based on an SCS of the specific BWP being the second SCS, the processor 102 communicates with the base station using the second subband frequency resources.

The second wireless device 200 may include one or more processors 202 and one or more memories 204 and additionally further include one or more transceivers 206 and/or one or more antennas 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip. The processor 202 transmits frequency resource information to a user equipment (UE) and performs a communication with the UE based on the frequency resource information in a specific bandwidth part (BWP). The frequency resource information informs of first subband frequency resources for a first subcarrier spacing (SCS) and second subband frequency resources for a second SCS. Based on an SCS of the specific BWP being the first SCS, the processor 202 communicates with the UE using the first subband frequency resources, and based on an SCS of the specific BWP being the second SCS, the processor 202 communicates with the UE using the second subband frequency resources.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, at least one computer readable medium (CRM) having an instruction to be executed by at least one processor to perform operations includes: receiving frequency resource information from a base station and performing a communication with the base station based on the frequency resource information in a specific bandwidth part (BWP). The frequency resource information informs of first subband frequency resources for a first subcarrier spacing (SCS) and second subband frequency resources for a second SCS. Based on an SCS of the specific BWP being the first SCS, the CRM communicates with the base station using the first subband frequency resources, and based on an SCS of the specific BWP being the second SCS, the CRM communicates with the base station using the second subband frequency resources.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

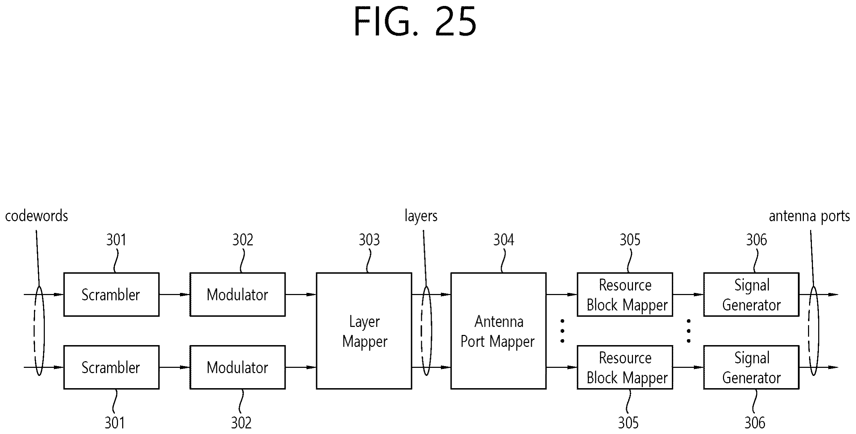

FIG. 25 shows an example of a structure of a signal processing module. Herein, signal processing may be performed in the processors 102 and 202 of FIG. 24.

Referring to FIG. 25, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

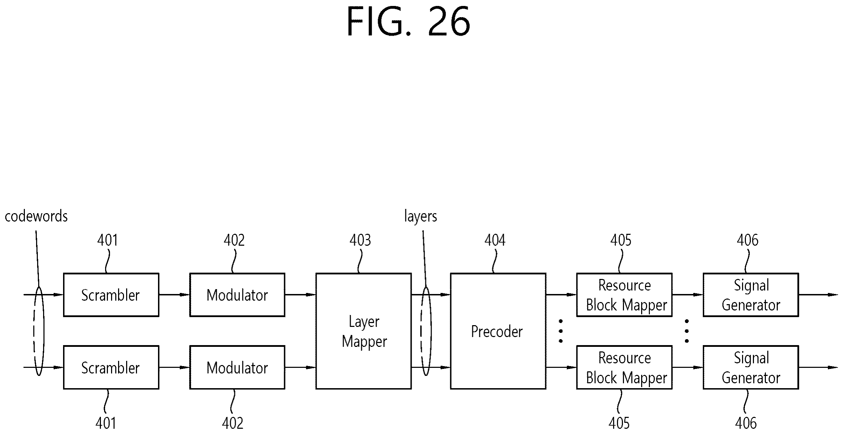

FIG. 26 shows another example of a structure of a signal processing module in a transmitting device. Herein, signal processing may be performed in a processor of a UE/BS, such as the processors 102 and 202 of FIG. 24.

Referring to FIG. 26, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

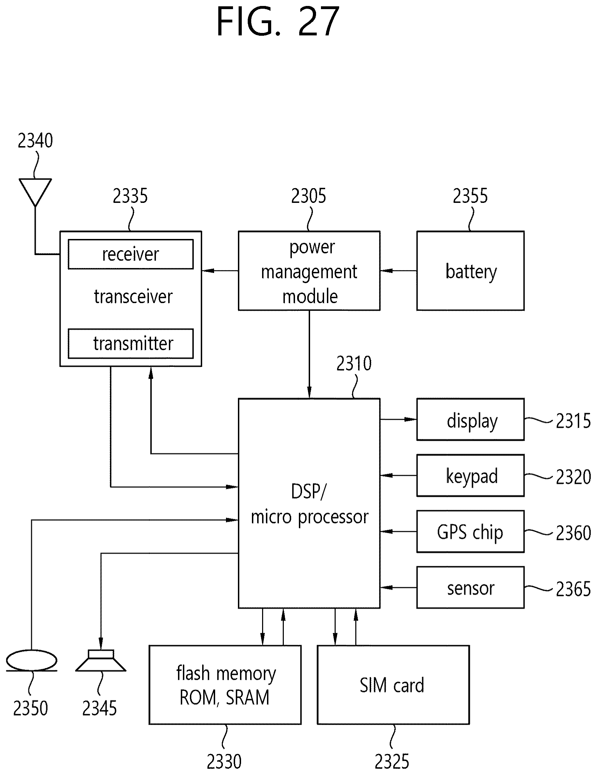

FIG. 27 illustrates an example of a wireless communication device according to an implementation example of the present disclosure.

Referring to FIG. 27, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 27 may be the processors 102 and 202 in FIG. 24.

The memory 2330 is connected to the processor 2310 and stores information related to operations of the processor. The memory may be located inside or outside the processor and connected to the processor through various techniques such as wired connection and wireless connection. The memory 2330 in FIG. 27 may be the memories 104 and 204 in FIG. 24.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

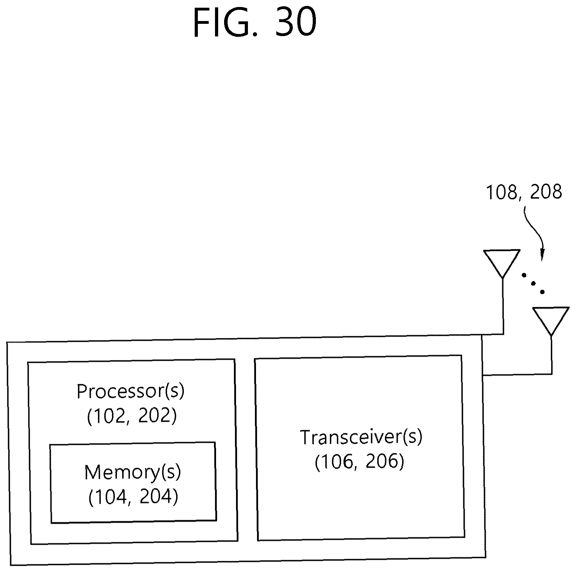

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 27 may be the transceivers 106 and 206 in FIG. 30.

Although not shown in FIG. 27, various components such as a camera and a universal serial bus (USB) port may be additionally included in the UE. For example, the camera may be connected to the processor 2310.

FIG. 27 is an example of implementation with respect to the UE and implementation examples of the present disclosure are not limited thereto. The UE need not essentially include all the components shown in FIG. 27. That is, some of the components, for example, the keypad 2320, the GPS chip 2360, the sensor 2365 and the SIM card 2325 may not be essential components. In this case, they may not be included in the UE.

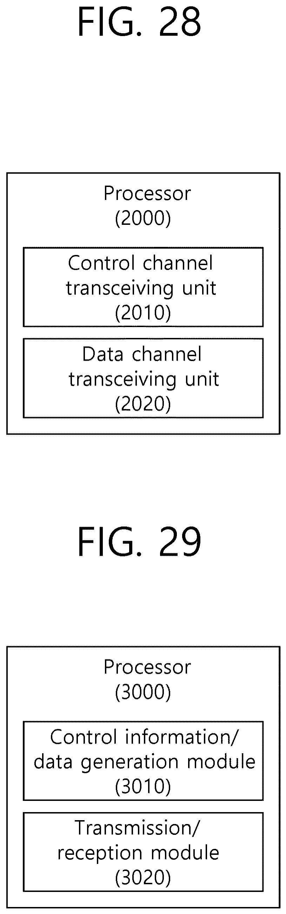

FIG. 28 shows an example of the processor 2000.

Referring to FIG. 28, The processor 2000 may include a control channel transceiver 2010 and a data channel transceiver 2020. For example, the processor 2000 may execute the methods described in FIGS. 17 to 19 from the UE perspective. The processor 2000 may be an example of the processors 102 and 202 of FIG. 24.

FIG. 29 shows an example of the processor 3000.

Referring to FIG. 29, The processor 3000 may include a control information/data generation module 3010 and a transmit/receive module 3020. The processor 3000 may execute the methods described in FIGS 17 to 19, for example, from the perspective of a base station or network. The processor 3000 may be an example of the processors 102, 202 of FIG. 24.

FIG. 30 shows another example of a wireless device.

Referring to FIG. 30, the wireless device may include one or more processors 102 and 202, one or more memories 104 and 204, one or more transceivers 106 and 206 and one or more antennas 108 and 208.

The example of the wireless device described in FIG. 30 is different from the example of the wireless described in FIG. 24 in that the processors 102 and 202 and the memories 104 and 204 are separated in FIG. 24 whereas the memories 104 and 204 are included in the processors 102 and 202 in the example of FIG. 30. That is, the processor and the memory may constitute one chipset.

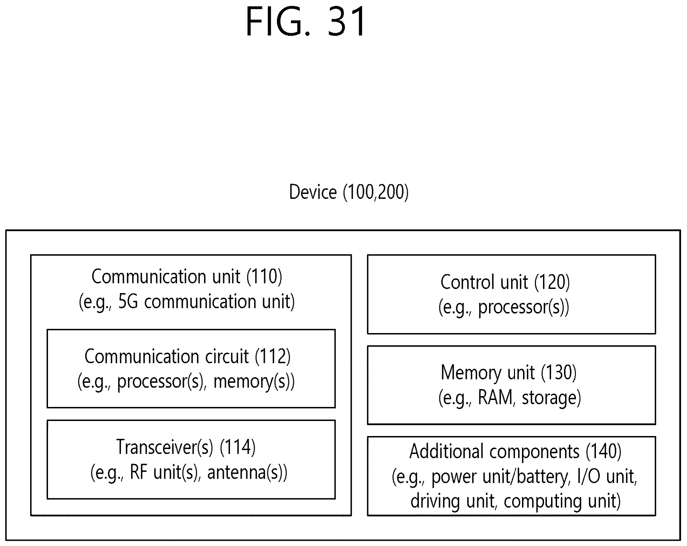

FIG. 31 shows another example of a wireless device applied to the present specification. The wireless device may be implemented in various forms according to a use-case/service.

Referring to FIG. 31, wireless devices 100 and 200 may correspond to the wireless devices 100 and 200 of FIG. 24 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204. For example, the transceiver(s) 114 may include the one or more transceivers 106 and 206 and/or the one or more antennas 108 and 208 of FIG. 24. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. In addition, the control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot 100a of FIG. 34, the vehicles 100b-1, 100b-2 of FIG. 34, the XR device 100c of FIG. 34, the hand-held device 100d of FIG. 34, the home appliance 100e of FIG. 34, the IoT device 100f of FIG. 34, a digital broadcast UE, a hologram device, a public safety device, an MTC device, a medicine device, a fintech device (or a finance device), a security device, a climate/environment device, the AI server/device 400 of FIG. 34, the BSs 200 of FIG. 34, a network node, etc. The wireless device may be used in a mobile or fixed place according to a use-example/service.

In FIG. 31, various elements, components, units/parts, and/or modules within the wireless devices 100 and 200 may be entirely interconnected through a wired interface, or at least a portion may be wirelessly connected through the communication unit 110. For example, within the wireless devices 100 and 200, the control unit 120 and the communication unit 110 may be connected by wire, and the control unit 120 and the first unit (e.g., 130 and 140) may be connected through the communication unit 110. Additionally, each element, component, unit/part, and/or module within the wireless devices 100 and 200 may further include one or more elements. For example, the control unit 120 may be comprised of one or more processor sets. For example, the control unit 120 may be comprised of a communication control processor, an application processor, an electronic control unit (ECU), a graphics processing processor, and a memory control processor. As another example, the memory unit 130 includes random access memory (RAM), dynamic RAM (DRAM), read only memory (ROM), flash memory, volatile memory, and non-volatile memory. volatile memory) and/or a combination thereof.

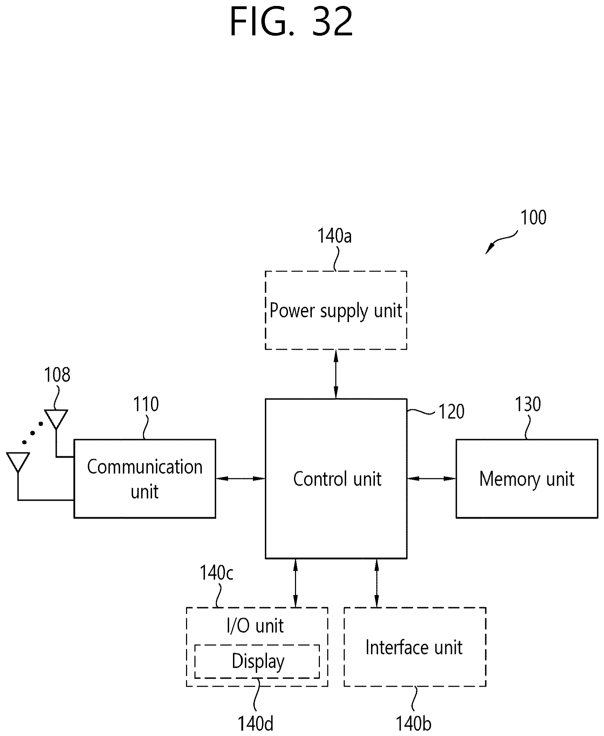

FIG. 32 illustrates a hand-held device to which this specification applies is exemplified. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 32, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c respective correspond to the blocks 110 to 130/140 of FIG. 31.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. In addition, the memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

For example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. In addition, the communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

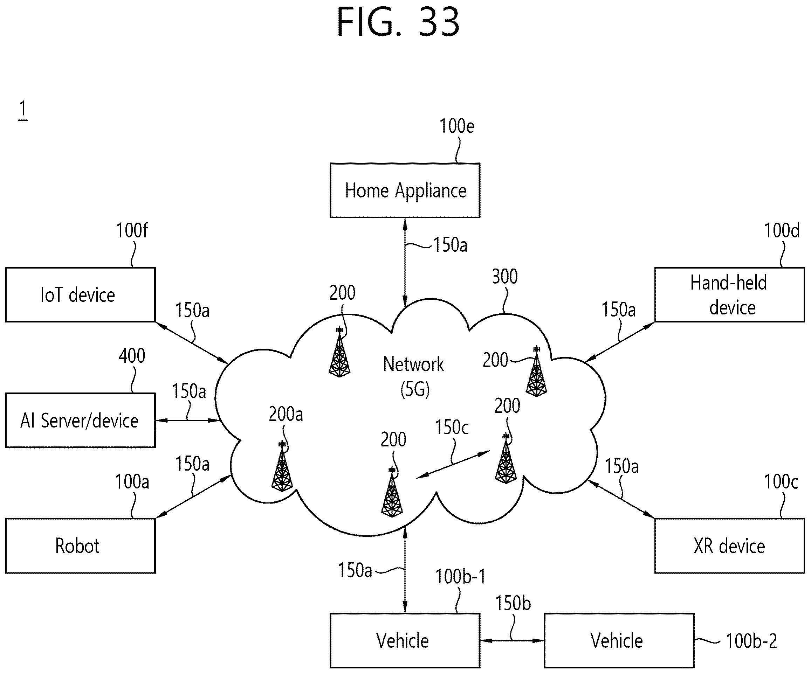

FIG. 33 illustrates a communication system 1 applied to the present specification.

Referring to FIG. 33, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 11. For convenience of explanation, among the frequency ranges that are used in an NR system, FR1 may mean a "sub 6GHz range", and FR2 may mean an "above 6GHz range" and may also be referred to as a millimeter wave (mmW).

[Table 11]

| Frequency Range designation | Corresponding frequency range | Subcarrier Spacing (SCS) |
|---|---|---|
| FR1 | 450MHz - 6000MHz | 15, 30, 60kHz |

(continued)

| Frequency Range designation | Corresponding frequency range | Subcarrier Spacing (SCS) |
|---|---|---|
| FR2 | 24250MHz - 52600MHz | 60, 120, 240kHz |

As described above, the values of the frequency ranges in the NR system may be changed. For example, as shown in Table 12 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

[Table 12]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

**Claims**

1. A method of operating a user equipment (UE) in a wireless communication system, the method comprising:

   receiving frequency resource information from a base station; and
   performing a communication with the base station based on the frequency resource information in a specific bandwidth part (BWP),
   wherein the frequency resource information informs of first subband frequency resources for a first subcarrier spacing (SCS) and second subband frequency resources for a second SCS,
   wherein based on an SCS of the specific BWP being the first SCS, the UE communicates with the base station using the first subband frequency resources, and
   wherein based on an SCS of the specific BWP being the second SCS, the UE communicates with the base station using the second subband frequency resources.

2. The method of claim 1, wherein each of the first subband frequency resources and the second subband frequency resources is a frequency resource constituting one uplink subband.

3. The method of claim 2, wherein the frequency resource information provides first information related to a start position and second information related to a subband size for each of the first subband frequency resources and the second subband frequency resources.

4. The method of claim 3, wherein the one uplink subband comprises resource block groups of a same size as the subband size based on the second information from a start position based on the first information.

5. The method of claim 1, wherein each of the first subband frequency resources and the second subband frequency resources is a frequency resource constituting one downlink subband.

6. The method of claim 5, wherein the frequency resource information provides third information related to a start position and fourth information related to a subband size for each of the first subband frequency resources and the second subband frequency resources.

7. The method of claim 6, wherein the one downlink subband comprises resource block groups of a same size as the subband size based on the third information from a start position based on the fourth information.

8. The method of claim 1, wherein each of the first subband frequency resources and the second subband frequency resources is a frequency resource constituting two downlink subbands.

9. The method of claim 8, wherein the frequency resource information includes information related to a start position and information related to a subband size for each of the two downlink subbands.

10. The method of claim 1, wherein the frequency resource information is received via a radio resource control (RRC) message.

11. A user equipment (UE), comprising:

at least one transceiver;
at least one memory; and
at least one processor operably coupled to the at least one memory and the at least one transceiver, wherein the at least one processor is adapted to:

receive frequency resource information from a base station; and
perform a communication with the base station based on the frequency resource information in a specific bandwidth part (BWP),
wherein the frequency resource information informs of first subband frequency resources for a first subcarrier spacing (SCS) and second subband frequency resources for a second SCS,
wherein based on an SCS of the specific BWP being the first SCS, the UE communicates with the base station using the first subband frequency resources, and
wherein based on an SCS of the specific BWP being the second SCS, the UE communicates with the base station using the second subband frequency resources.

12. An apparatus of a user equipment (UE), the apparatus comprising:

at least one memory; and
at least one processor operably coupled to the at least one memory,
wherein the at least one processor is adapted to:

receive frequency resource information from a base station; and
perform a communication with the base station based on the frequency resource information in a specific bandwidth part (BWP),
wherein the frequency resource information informs of first subband frequency resources for a first subcarrier spacing (SCS) and second subband frequency resources for a second SCS,
wherein based on an SCS of the specific BWP being the first SCS, the at least one processor communicates with the base station using the first subband frequency resources, and
wherein based on an SCS of the specific BWP being the second SCS, the at least one processor communicates with the base station using the second subband frequency resources.

13. At least one computer readable medium (CRM) having instructions to be executed by at least one processor to perform operations includes:

receiving frequency resource information from a base station; and
performing a communication with the base station based on the frequency resource information in a specific bandwidth part (BWP),
wherein the frequency resource information informs of first subband frequency resources for a first subcarrier spacing (SCS) and second subband frequency resources for a second SCS,
wherein based on an SCS of the specific BWP being the first SCS, the at least one processor communicates with the base station using the first subband frequency resources, and
wherein based on an SCS of the specific BWP being the second SCS, the at least one processor communicates with the base station using the second subband frequency resources.

14. A method of operating a base station in a wireless communication system, the method comprising:

transmitting frequency resource information to a user equipment (UE); and

performing a communication with the UE based on the frequency resource information in a specific bandwidth part (BWP),

wherein the frequency resource information informs of first subband frequency resources for a first subcarrier spacing (SCS) and second subband frequency resources for a second SCS,

wherein based on an SCS of the specific BWP being the first SCS, the base station communicates with the UE using the first subband frequency resources, and

wherein based on an SCS of the specific BWP being the second SCS, the base station communicates with the UE using the second subband frequency resources.

15. A base station (BS), comprising:

at least one transceiver;

at least one memory; and

at least one processor operably coupled to the at least one memory and the at least one transceiver, wherein the at least one processor is adapted to:

transmit frequency resource information to a user equipment (UE); and

perform a communication with the UE based on the frequency resource information in a specific bandwidth part (BWP),

wherein the frequency resource information informs of first subband frequency resources for a first subcarrier spacing (SCS) and second subband frequency resources for a second SCS,

wherein based on an SCS of the specific BWP being the first SCS, the base station communicates with the UE using the first subband frequency resources, and

wherein based on an SCS of the specific BWP being the second SCS, the base station communicates with the UE using the second subband frequency resources.

# FIG. 1

# FIG. 2

# FIG. 3

# FIG. 4

# FIG. 5

**gNB**

- RRM between cells
- RB control
- Connection mobility control
- Wireless access control
- Measurement setting and provision
- Dynamic resource allocation (scheduler)

NG-RAN

**AMF**

- NAS security
- Idle state mobility processing

**UPF**

- Mobility anchoring
- PDU processing

5GC

**SMF**

- UE IP address allocation
- PDU session control

Internet

EP 4 668 664 A1

# FIG. 6

# FIG. 7

Resource grid

A carrier
(up to 3300 subcarriers,
i.e., 275 RBs)

A BWP

1RB=12 subcarriers

1 RE

1subcarrier

1 symbol

l=0 • • •

k=0

EP 4 668 664 A1

# FIG. 8

CCE #2   CCE #n

$N^{CORESET}_{RB}$ resource blocks

CCE #1

1, 2 or 3 OFDM symbols

# FIG. 9

Downlink only, or Uplink only

Frequency

RB index

Symbol index

One TTI

DL Control channel    UL Control channel

# FIG. 10

DL only

UL only

DL control

UL control } Mixed UL-DL

Slot

⬛ : DL    ▨ : UL

# FIG. 11

Initial cell search

P/S-SCH & [DLRS] & PBCH — S11

system information reception

PDCCH/ PDSCH (BCCH) — S12

random access procedure

PRACH — S13

PDCCH/ PDSCH — S14

PUSCH — S15

PDCCH/ PDSCH — S16

general DL/UL Tx/Rx

PDCCH/ PDSCH — S17

PUSCH/ PUCCH — S18

• DL/UL ACK/NACK
• UE CQI/PMI/Rank report using PUSCH and/or PUCCH

# FIG. 12

(a)

DL    UL

Frequency

Carrier #0
Subband-wise Full Duplex

(b)

DL    UL

Frequency

Carrier #0
Spectrum-Sharing Full Duplex

# FIG. 13

(a)

(b)

# FIG. 14

A: First time resource
B: Second time resource

(a)

(b)

# FIG. 15

A: First time resource
B: Second time resource

(a)

(b)

# FIG. 16

(a)

(b)

(c)

# FIG. 17

System BW · · · · · · · · · · · · Center freq

freq

(a)

System BW · · · · · · · · · · · · Center freq

freq

(b)

System BW · · · · · · · · · · · · Center freq

freq

(c)

# FIG. 18

(a)

(b)

(c)

# FIG. 19

# FIG. 20

(a)

(b)

(c)

# FIG. 21

EP 4 668 664 A1

# FIG. 22

Receiving frequency resource information notifying
first subband frequency resources for a first subcarrier
spacing (SCS) and second subband frequency resources
for a second SCS from the base station — S221

Performing communication with the base station
based on the frequency resource information in
a specific frequency bandwidth part (BWP),
wherein based on the SCS of the specific BWP being
the first SCS, the UE communicates with the base station
using the first subband frequency resources,
and based on the SCS of the specific BWP being
the second SCS, the UE communicates
with the base station using
the second subband frequency resources — S222

# FIG. 23

BS

UE

S231 — Frequency resource information that informs the UE of SCS-specific subband frequency resources for each of a plurality of SCSs

S232 — BWP configuration information for a specific BWP (including BWP ID, SCS configuration, etc)

S233 — Communicating with the UE using the first subband frequency resources or the second subband frequency resources depending on whether the SCS of the specific BWP is the first SCS or the second SCS

# FIG. 24

EP 4 668 664 A1

# FIG. 25

codewords

301    302    303    layers    304    305    antenna ports    306

| Scrambler | → | Modulator | → | | | | | | Resource Block Mapper | → | Signal Generator | →

Layer Mapper → Antenna Port Mapper

| Scrambler | → | Modulator | → | | | | | | Resource Block Mapper | → | Signal Generator | →

301    302    305    306

# FIG. 26

codewords

layers

| | 401 | 402 | 403 | 404 | 405 | 406 |
|---|---|---|---|---|---|---|

Scrambler → Modulator → Layer Mapper → Precoder → Resource Block Mapper → Signal Generator

Scrambler → Modulator → ... → Resource Block Mapper → Signal Generator

401    402    405    406

# FIG. 27

# FIG. 28

```
┌─────────────────────────────────┐
│         Processor               │
│          (2000)                 │
│   ┌─────────────────────────┐   │
│   │    Control channel      │   │
│   │   transceiving unit     │   │
│   │        (2010)           │   │
│   └─────────────────────────┘   │
│   ┌─────────────────────────┐   │
│   │    Data channel         │   │
│   │   transceiving unit     │   │
│   │        (2020)           │   │
│   └─────────────────────────┘   │
└─────────────────────────────────┘
```

# FIG. 29

```
┌─────────────────────────────────┐
│         Processor               │
│          (3000)                 │
│   ┌─────────────────────────┐   │
│   │  Control information/   │   │
│   │ data generation module  │   │
│   │        (3010)           │   │
│   └─────────────────────────┘   │
│   ┌─────────────────────────┐   │
│   │    Transmission/        │   │
│   │   reception module      │   │
│   │        (3020)           │   │
│   └─────────────────────────┘   │
└─────────────────────────────────┘
```

# FIG. 30

108, 208

Processor(s)
(102, 202)

Memory(s)
(104, 204)

Transceiver(s)
(106, 206)

# FIG. 31

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

EP 4 668 664 A1

# FIG. 32

140a

Power supply unit

100

108

110

Communication unit

120

Control unit

130

Memory unit

140c

I/O unit

Display

Interface unit

140d

140b

# FIG. 33

## INTERNATIONAL SEARCH REPORT

| | International application No. |
|---|---|
| | **PCT/KR2024/001737** |

| A. | CLASSIFICATION OF SUBJECT MATTER |
|---|---|

**H04L 5/14**(2006.01)i; **H04W 72/04**(2009.01)i; **H04W 72/231**(2023.01)i; **H04L 5/00**(2006.01)i

According to International Patent Classification (IPC) or to both national classification and IPC

| B. | FIELDS SEARCHED |
|---|---|

Minimum documentation searched (classification system followed by classification symbols)

H04L 5/14(2006.01); H04L 1/04(2006.01); H04L 27/26(2006.01); H04L 5/00(2006.01); H04W 72/04(2009.01); H04W 72/12(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SCS, 서브밴드(subband), BWP, 자원(resource)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 11166283 B2 (GUANGDONG OPPO MOBILE TELECOMMUNICATIONS CORP., LTD.) 02 November 2021 (2021-11-02)<br>See column 2, line 27 - column 3, line 2 and column 8, line 9 - column 9, line 5; claims 1-18; and figure 3. | 1-15 |
| Y | US 11490376 B2 (SAMSUNG ELECTRONICS CO., LTD.) 01 November 2022 (2022-11-01)<br>See column 2, line 33 - column 7, line 15; and claims 1-18. | 1-15 |
| Y | WO 2022-031824 A1 (RASTEGARDOOST, Nazanin et al.) 10 February 2022 (2022-02-10)<br>See paragraphs [0094]-[0108]; and claims 1-40. | 10 |
| A | US 2021-0351968 A1 (BEIJING XIAOMI MOBILE SOFTWARE CO., LTD.) 11 November 2021 (2021-11-11)<br>See paragraphs [0094]-[0100]; and claims 1-14. | 1-15 |
| A | 3GPP; TSG RAN; NR; RRC protocol specification (Release 17). 3GPP TS 38.331 V17.3.0 (December 2022). 16 January 2023.<br>See section 6.3.2. | 1-15 |

| ☐ Further documents are listed in the continuation of Box C. | ☑ See patent family annex. |
|---|---|

| | * Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 May 2024** | **14 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
### Information on patent family members

International application No.

**PCT/KR2024/001737**

| Patent document cited in search report | | | Publication date (day/month/year) | Patent family member(s) | | | Publication date (day/month/year) |
|---|---|---|---|---|---|---|---|
| US | 11166283 | B2 | 02 November 2021 | AU | 2016-432994 | A1 | 04 July 2019 |
| | | | | AU | 2016-432994 | B2 | 19 May 2022 |
| | | | | BR | 112019012941 | A2 | 10 December 2019 |
| | | | | CA | 3047346 | A1 | 28 June 2018 |
| | | | | CA | 3047346 | C | 02 May 2023 |
| | | | | CN | 110089170 | A | 02 August 2019 |
| | | | | CN | 110089170 | B | 22 December 2020 |
| | | | | CN | 112584522 | A | 30 March 2021 |
| | | | | CN | 112584522 | B | 04 July 2023 |
| | | | | EP | 3547771 | A1 | 02 October 2019 |
| | | | | EP | 3547771 | A4 | 18 December 2019 |
| | | | | IL | 267415 | A | 29 August 2019 |
| | | | | IL | 267415 | B | 01 July 2022 |
| | | | | JP | 2020-504946 | A | 13 February 2020 |
| | | | | JP | 7170643 | B2 | 14 November 2022 |
| | | | | KR | 10-2019-0099219 | A | 26 August 2019 |
| | | | | MX | 2019007569 | A | 16 August 2019 |
| | | | | PH | 12019501456 | A1 | 10 February 2020 |
| | | | | RU | 2733272 | C1 | 01 October 2020 |
| | | | | TW | 201824802 | A | 01 July 2018 |
| | | | | TW | I744432 | B | 01 November 2021 |
| | | | | US | 11903004 | B2 | 13 February 2024 |
| | | | | US | 2020-0022148 | A1 | 16 January 2020 |
| | | | | US | 2022-0070871 | A1 | 03 March 2022 |
| | | | | WO | 2018-112890 | A1 | 28 June 2018 |
| | | | | ZA | 201904039 | B | 28 April 2022 |
| US | 11490376 | B2 | 01 November 2022 | CN | 110475342 | A | 19 November 2019 |
| | | | | EP | 3782416 | A1 | 24 February 2021 |
| | | | | US | 2019-0349898 | A1 | 14 November 2019 |
| | | | | WO | 2019-216748 | A1 | 14 November 2019 |
| WO | 2022-031824 | A1 | 10 February 2022 | US | 2023-0189232 | A1 | 15 June 2023 |
| US | 2021-0351968 | A1 | 11 November 2021 | CN | 109076557 | A | 21 December 2018 |
| | | | | CN | 109076557 | B | 30 June 2023 |
| | | | | EP | 3829232 | A1 | 02 June 2021 |
| | | | | EP | 3829232 | A4 | 02 March 2022 |
| | | | | US | 11799705 | B2 | 24 October 2023 |
| | | | | WO | 2020-019208 | A1 | 30 January 2020 |

Form PCT/ISA/210 (patent family annex) (July 2022)